(19) Europäisches Patentamt

European Patent Office

Office européen des brevets

(11) Publication number: **0 566 688 B1**

## (12) EUROPEAN PATENT SPECIFICATION

(45) Date of publication of patent specification: **28.12.94**   (51) Int. Cl.[5]: **C04B 41/91**, C04B 35/56

(21) Application number: **92904903.9**

(22) Date of filing: **10.01.92**

(86) International application number:
**PCT/US92/00180**

(87) International publication number:
**WO 92/12108 (23.07.92 92/19)**

(54) **REMOVING METAL FROM COMPOSITE BODIES, AND RESULTING PRODUCTS.**

(30) Priority: **11.01.91 US 639853**

(43) Date of publication of application:
**27.10.93 Bulletin 93/43**

(45) Publication of the grant of the patent:
**28.12.94 Bulletin 94/52**

(84) Designated Contracting States:
**BE CH DE FR GB IT LI LU**

(56) References cited:
**EP-A- 0 261 057**
**EP-A- 0 261 062**
**EP-A- 0 375 588**
**WO-A-92/00939**

(73) Proprietor: **LANXIDE TECHNOLOGY COMPANY, LP**
**1300 Marrows Road,**
**P.O.Box 6077**
**Newark,**
**DE 19714-6077 (US)**

(72) Inventor: **SONUPARLAK, Birol**
**20 Danvers Circle**
**Newark, DE 19702 (US)**
Inventor: **JOHNSON, William, Bayard**
**14 Brookridge Lane**
**Newark, DE 19711 (US)**

(74) Representative: **Andrae, Steffen, Dr. et al**
**DENNEMEYER & ASSOCIATES**
**Balanstrasse 55**
**D-81541 München (DE)**

## Description

Technical Field

The present invention relates to a novel process for removing metal from composite bodies. Particularly, a composite body which comprises at least one metal component within a metallic constituent, which is at least partially accessible, or can be made to be at least partially accessible, from at least one surface thereof, may be subjected to the methods of the present invention to remove at least a portion, or substantially all, of the metallic constituent from the composite body. The metallic constituent, or at least a metal component of the metallic constituent, may be removed without the requirement for the application of any pressure or vacuum.

Background Art

Composite products (e.g., ceramic reinforced metals and metal reinforced ceramics) comprising a metallic constituent and a second component, such as a strengthening or reinforcing phase (e.g., ceramic particulates, whiskers, fibers or the like) show great promise for a variety of applications. However, in some cases a metallic constituent, or at least one metallic component of the metallic constituent, in a composite body may prevent the composite body from being used in some industrial applications. For example, if a composite body contained an aluminum component as, or in, the metallic constituent, and also contained a ceramic phase or component, the aluminum component, if present in substantial amounts, could prohibit the composite body from being utilized in, for example, certain high temperature applications, certain corrosive environments, certain erosive environments, etc. Thus, in some cases, it may be desirable to remove at least a portion, or substantially all, of a particular component in the metallic constituent or the metallic constituent itself from the composite body.

Various methods for removing a metallic constituent from a composite body are known in the art. Specifically, the general knowledge that a metallic constituent can be leached from a composite body exists. Moreover, the general knowledge that the simultaneous application of temperature and some type of mechanically applied pressure to remove a metallic constituent from a composite body also exists. However, these methods have drawbacks associated with them. For example, the simultaneous application of temperature and pressure could have a deleterious effect upon the microstructure of the composite body. Moreover, the shape of the composite body could be adversely affected if a large amount of pressure was applied. Likewise, subjecting a composite body to a leaching step could also have deleterious effects upon the microstructure (or macrostructure) of the composite body. Still further, these processes may not reliably remove substantial portions of a metallic constituent unless long amounts of time and/or relatively high temperatures are provided for metallic constituent removal. Moreover, such methods may not be capable of selectively removing one or more metallic components within a metallic constituent.

Accordingly, there has been a long felt need for a simple and reliable process to remove from certain composite bodies some or all of a metallic component of a metallic constituent, as well as removing some or all of the metallic constituent itself, said process not relying upon the use of applied pressure or vacuum (whether externally applied or internally created). The present invention satisfies these and other needs by providing a technique for the removal of at least a portion, or substantially all, of a metallic constituent from a composite body, without the requirement for the application of pressure, etc. Moreover, the present invention provides a technique for the selected removal of at least one metallic component of a metallic constituent and/or selected areas of removal of at least one metallic component of a metallic constituent from the composite body.

Description of Commonly Owned U.S. Patent Applications

The priority document of this application is a continuation-in-part of commonly owned and copending U.S. Patent Application Serial No. 07/639,853, filed January 11, 1991, which is a continuation-in-part of US Patent Application Serial No. 07/443,265, filed November 29, 1989, in the names of Birol Sonuparlak et al., and entitled "A Method of Removing Metal From Composite Bodies and Products Produced Thereby".

The subject matter of this application is somewhat related to the subject matter contained in several other commonly owned copending patent applications. Specifically, the concept of spontaneous infiltration to form a metal matrix composite body has been disclosed in a number of commonly owned patent applications, the most relevant of which are discussed below herein.

A novel method for forming metal matrix composite bodies is disclosed in commonly owned U.S. Patent Application Serial No. 07/521,043, filed May 9, 1990 (US-A-5 249 621), which is a continuation-in-part of U.S. Patent Application Serial No. 07/484,753, filed February 23, 1990, which is a continuation-in-part of U.S. Patent Application Serial No. 07/432,661, filed November 7, 1989, which is continuation-in-part of U.S. Patent Application Serial No. 07/416,327, filed October 6, 1989, which in turn is a continuation-in-part of U.S. Patent Application Serial No. 07/349,590, filed May 9, 1989, which in turn is a continuation-in-part of U.S. Serial No. 07/269,311, filed November 10, 1988, all of which were filed in the names of Aghajanian et al., and all of which were entitled "A Method of Forming Metal Matrix Composite Bodies by a Spontaneous Infiltration Process, and Products Produced Therefrom".

Under the process conditions disclosed in the aforementioned Aghajanian et al., applications, a metal matrix composite body is produced by spontaneously infiltrating (i.e., infiltrating without the requirement of pressure, whether externally applied or internally created) a permeable mass of filler material or a preform with a molten matrix metal. Specifically, an infiltration enhancer and/or an infiltration enhancer precursor and/or an infiltrating atmosphere are in communication with the filler material or preform, at least at some point during the process, which permits molten matrix metal to spontaneously infiltrate the filler material or preform.

In a first preferred embodiment, a precursor to an infiltration enhancer may be supplied to at least one of a filler material or preform, and/or a matrix metal, and/or an infiltrating atmosphere. The supplied infiltration enhancer precursor may thereafter react with at least one constituent in the filler material or preform, and/or the matrix metal, and/or the infiltrating atmosphere to produce infiltration enhancer in at least a portion of, or on, the filler material or preform. Ultimately, at least during the spontaneous infiltration, infiltration enhancer should be in contact with at least a portion of the filler material or preform.

In another preferred embodiment of the Aghajanian et al., invention, rather than supplying an infiltration enhancer precursor, an infiltration enhancer may be supplied directly to at least one of the filler material or preform, and/or matrix metal, and/or infiltrating atmosphere. Ultimately, at least during the spontaneous infiltration, the infiltration enhancer should be in contact with at least a portion of the filler material or preform.

These Aghajanian et al., applications disclose numerous examples of matrix metals, which at some point during the formation of a metal matrix composite, may be contacted with an infiltration enhancer precursor, in the presence of an infiltrating atmosphere. Thus, various references were made in the aforementioned application to particular matrix metal/infiltration enhancer precursor/infiltrating atmosphere systems which exhibit spontaneous infiltration. However, as stated in these Aghajanian et al., applications, it is conceivable that many other matrix metal/infiltration enhancer precursor/infiltrating atmosphere systems other than those discussed in the applications may behave in a manner similar to the systems expressly discussed therein. Specifically, spontaneous infiltration behavior has been observed in the aluminum/magnesium/nitrogen system; the aluminum/strontium/nitrogen system; the aluminum/zinc/oxygen system; and the aluminum/calcium/nitrogen system. Accordingly, even though the Aghajanian et al., applications discuss only those systems referred to above herein, Aghajanian et al., state that it should be understood that other matrix metal/infiltration enhancer precursor/infiltrating atmosphere systems may behave in a similar manner.

In a preferred embodiment for achieving spontaneous infiltration into a permeable mass of filler material or a preform, molten matrix metal is contacted with the preform or filler material. The preform or filler material may have admixed therewith, and/or at some point during the process, be exposed to, an infiltration enhancer precursor. Moreover, in a preferred embodiment, the molten matrix metal, and/or preform or filler material, communicate with an infiltrating atmosphere for at least a portion of the process. In another preferred embodiment, the matrix metal, and/or preform or filler material, communicate with an infiltrating atmosphere for substantially all of the process. The preform or filler material will be spontaneously infiltrated by molten matrix metal, and the extent or rate of spontaneous infiltration and formation of metal matrix composite will vary with a given set of processing conditions including, for example, the concentration of infiltration enhancer precursor provided to the system (e.g., in the molten matrix alloy and/or in the filler material or preform and/or in the infiltrating atmosphere), the size and/or composition of the filler material, the size and/or composition of particles in the filler material or preform, the available porosity for infiltration into the preform or filler material, the time permitted for infiltration to occur, and/or the temperature at which infiltration occurs. Spontaneous infiltration typically occurs to an extent sufficient to embed substantially completely the preform or filler material.

The entire disclosure of the above-discussed commonly owned Aghajanian et al., patent applications are expressly incorporated herein by reference.

EP 0 566 688 B1

Summary of the Invention

A metallic constituent of a composite body can be at least partially, or substantially completely, removed by causing at least one metallic component of the metallic constituent to spontaneously infiltrate an adjacent permeable mass of filler material or a preform. To achieve such spontaneous infiltration, at least a portion of the permeable mass is placed into contact with at least a portion of the metallic constituent contained within the composite body. Thus, at least a portion of the metallic constituent should be at least partially accessible, or can be made to be at least partially accessible, from at least one surface of the composite body.

Specifically, an infiltration enhancer and/or an infiltration enhancer precursor and/or an infiltrating atmosphere are in communication with the filler material or preform, at least at some point during the process, which permits the at least one metallic component of the metallic constituent of a composite body, when made molten, to spontaneously infiltrate at least a portion of the contacted filler material or preform. In a first preferred embodiment, a precursor to an infiltration enhancer may be supplied to at least one of a portion of at least one surface of the composite body, and/or diffused into at least a portion of the metallic constituent of the composite body, and/or mixed into at least a portion of the filler material or preform which is placed into contact with at least a portion of the composite body, and/or contained in an infiltrating atmosphere. The supplied infiltration enhancer precursor may thereafter react with at least one of a component in the filler material or preform, and/or at least one metallic component in the metallic constituent of the composite body, and/or the infiltrating atmosphere, thereby producing infiltration enhancer in at least a portion of, or on at least a portion of, the filler material or preform, which in turn is in contact with at least a portion of at least one surface of the composite body. Ultimately, at least during the spontaneous infiltration, infiltration enhancer should be in contact with at least a portion of the filler material or preform.

In another preferred embodiment of the invention, rather than supplying an infiltration enhancer precursor, an infiltration enhancer may be supplied directly to at least one of the filler material or preform, and/or metallic constituent of the composite body, and/or infiltrating atmosphere. Ultimately, at least during the spontaneous infiltration, the infiltration enhancer should be in contact with at least a portion of the filler material or preform which, in turn, is in contact with at least a portion of the surface of the composite body.

In any of the above-discussed preferred embodiments; the presence of infiltration enhancer and/or infiltration enhancer precursor in or on at least a portion of the filler material or preform may cause at least one metallic component of the metallic constituent, or substantially all of the metallic constituent of the composite body, to spontaneously infiltrate at least a portion of the filler material or preform. The amount of or selected portion of metallic constituent which is caused to spontaneously infiltrate the filler material or preform can be controlled to achieve desirable metal removal. Specifically, substantially all metallic constituent located in a certain area within a composite body (e.g., located near a surface of the composite body) may be completely removed from that selected area thereby leaving other areas of metallic constituent within the composite body substantially undisturbed. Moreover, if the metallic constituent is substantially interconnected throughout the composite body, substantially all of the metallic constituent could be removed. The volumetric amount of metallic constituent to be removed from the composite body depends upon the ultimate application for the composite body. Thus, the present invention may be utilized merely as a surface modification process for composite products, or it could be used to remove substantially all of a metallic constituent from composite products.

Still further, selected portions of the metallic constituent could be separately removed, leaving behind substantially undisturbed residual metallic constituent. Specifically, one or more metallic components of a multi-phase metallic constituent could be removed from selected areas of a composite body or could be removed substantially uniformly from the composite body, depending upon the ultimate application for the composite body. Such selected removal of one or more metallic components of a multi-phase metallic constituent could occur, for example, due to operating at a temperature range within which only said one or more metallic components were molten and thus were the only components that were involved in the spontaneous infiltration (i.e., metal removal process). However, for example, if the temperature was increased to a range within which all components of the multi-phase metallic constituent were rendered molten, then the entire multi-phase metallic constituent may be removable from the composite body. Selective removal of at least one component from the multi-phase metallic constituent could provide for a grading, either slight or substantial, of the microstructure of a composite body, thus resulting in graded properties of the composite body.

In another preferred embodiment for removing at least one metallic component of a metallic constituent from at least a portion of a composite body, the composite body may be substantially completely

4

surrounded by and contacted with a filler material or preform. In this embodiment, spontaneous infiltration of the filler material or preform by at least a portion, or substantially all, of the metallic constituent could be achieved from substantially all surfaces of the composite body, so long as the metallic constituent is at least partially accessible, or could be made to be at least partially accessible, from such surfaces.

In another preferred embodiment for removing at least one metallic component of a metallic constituent from a composite body, only a portion of the composite body may be contacted with a permeable mass of filler material or preform. In this preferred embodiment, at least one metallic component of the metallic constituent could be selectively removed from that surface which is in contact with the permeable mass. In this preferred embodiment, a grading of the properties of the composite body may be achieved by varying the volume percent of metallic constituent present from, for example, one side of the composite body to an opposite side of the composite body. Thus, this grading of volume percent of metallic constituent within a composite body could permit the composite body to be utilized for a number of different conventional applications. Still further, by contacting only a portion of a composite body with a filler material or preform, any surface irregularities which may result from the removal of metallic constituent from a composite body can be substantially confined to that portion of the composite body which contacts the filler material or preform.

In another preferred embodiment, the amount of infiltration enhancer and/or infiltration enhancer precursor which is supplied to, for example, the filler material or preform, can be varied from one point in the filler material or preform to another point. Specifically, the amount of spontaneous infiltration of at least one metallic component of the metallic constituent in the composite body into an adjacent filler material or preform may be controlled by controlling the amount of infiltration enhancer and/or infiltration enhancer precursor provided in the filler material or preform. Thus, for example, by supplying a greater amount of infiltration enhancer precursor and/or infiltration enhancer to one side of a composite body relative to a different side of a composite body, the rate and/or amount of spontaneous infiltration of at least one metallic component of the metallic constituent in the composite body can be selectively controlled. Likewise, by controlling the type, pressure, location, etc. of infiltrating atmosphere supplied to, for example, different portions of the filler material or preform which are in contact with the metallic constituent of the composite body, the amount of spontaneous infiltration and/or rate of spontaneous infiltration can also be selectively controlled. Similarly, metal-removal can also be controlled by exposing composite bodies to static or non-flowing atmospheres, or by exposing composite bodies to flowing atmospheres. For example, the amounts of metal removal may differ when static atmospheres are utilized in contrast to utilization of flowing atmospheres. Still further, by controlling the temperature of different portions of the filler material or preform and/or composite body, the amount of spontaneous infiltration can also be selectively controlled.

In some situations, it is possible to predetermine the amount of infiltration enhancer and/or infiltration enhancer precursor which may be required to be present in a metallic constituent of a ceramic reinforced metal composite body or in a metal reinforced ceramic composite body. Accordingly, a composite body can be manufactured so as to contain a requisite amount of infiltration enhancer and/or infiltration enhancer precursor.

This application discloses specific examples directed to aluminum metal components of metallic constituent contained within aluminum reinforced ceramic composite bodies and ceramic reinforced aluminum composite bodies. However, it should be understood that virtually any metallic component of a metallic constituent contained within a composite body can be at least partially, or substantially completely, removed from the composite body, so long as the mechanisms of the present invention are followed. Thus, even though this application focuses primarily upon aluminum metallic components of metallic constituents contained within composite bodies, it should be understood that any metallic component contained within any composite body, whether the composite body comprises a two-phase composite body or, for example, comprises a ten-phase composite body, the metallic component of multi-phase bodies may behave in a similar manner to those metallic components disclosed in the Examples herein.

Definitions

"Aluminum", as used herein, means and includes essentially pure metal (e.g., a relatively pure, commercially available unalloyed aluminum) or other grades of metal and metal alloys such as the commercially available metals having impurities and/or alloying constituents such as iron, silicon, copper, magnesium, manganese, chromium, zinc, etc., therein. An aluminum alloy for purposes of this definition is an alloy or intermetallic compound in which aluminum is the major chemical constituent.

"Balance Non-Oxidizing Gas", as used herein, means that any gas present in addition to the primary gas comprising the infiltrating atmosphere, is either an inert gas or a reducing gas which is substantially non-reactive with the metallic constituent under the process conditions. Any oxidizing gas which may be present as an impurity in the gas(es) used should be insufficient to oxidize the metallic constituent to any substantial extent under the process conditions.

"Barrier" or "barrier means", as used herein, means any suitable means which interferes, inhibits, prevents or terminates the migration, movement, or the like, of molten metallic constituent or at least a metal component of metallic constituent beyond a surface boundary of a permeable mass of filler material or preform, where such surface boundary is defined by said barrier means. Suitable barrier means may be any such material, compound, element, composition, or the like, which; under the process conditions, maintains some integrity and is not substantially volatile (i.e., the barrier material does not volatilize to such an extent that it is rendered non-functional as a barrier).

Further, suitable "barrier means" includes materials which are substantially non-wettable by the migrating molten metallic constituent or at least a migrating molten component of the metallic constituent under the process conditions employed. A barrier of this type appears to exhibit substantially little or no affinity for the molten metallic constituent or at least a molten component of the metallic constituent, and movement beyond the defined surface boundary of the mass of filler material or preform is prevented or inhibited by the barrier means. The barrier may in certain cases be permeable or porous, or rendered permeable by, for example, drilling holes or puncturing the barrier, to permit a gaseous atmosphere to contact the molten matrix metal, etc.

"Ceramic", as used herein, should not be unduly construed as being limited to a ceramic body in the classical sense, that is, in the sense that it consists entirely of non-metallic and inorganic materials, but rather refers to a body which is predominantly ceramic with respect to either composition or dominant properties, although the body may contain minor or substantial amounts of one or more metallic constituents (isolated and/or interconnected, depending on the processing conditions used to form the body) derived from the parent metal, or reduced from the oxidant or a dopant, most typically within a range of from about 1-40 percent by volume, but may include still more metal.

"Ceramic Matrix Composite" or "CMC" or "Ceramic Composite Body", as used herein, means a material comprising a two- or three-dimensionally interconnected ceramic which has embedded a preform or filler material, and may further include a metallic constituent embedded therein, possibly in a two- or three-dimensionally interconnected network. The ceramic may include various dopant elements to provide a specifically desired microstructure, or specifically desired mechanical, physical, or chemical properties in the resulting composite.

"Filler", as used herein in conjunction with ceramic matrix composite bodies, means either single constituents or mixtures of constituents which are substantially non-reactive with and/or of limited solubility in the metallic constituent and may be single or multi-phase. Fillers may be provided in a wide variety of forms and sizes, such as powders, flakes, platelets, microspheres, whiskers, bubbles, etc., and may be either dense or porous. "Filler" may also include ceramic fillers, such as alumina or silicon carbide, as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum metal. Fillers may also include ceramic filler materials having a plurality of superimposed coatings thereon for improved mechanical properties such as fracture toughness, for example, silicon carbide fibers coated with boron nitride (BN)/silicon carbide (SiC) or titanium carbide (TiC)-/silicon nitride ($Si_3N_4$) or carbon (C)/silicon carbide (SiC); carbon fiber coated with carbon (C)/silicon carbide; and alumina fibers coated with iridium (Ir)/silicon carbide (SiC) or niobium (Nb)/silicon carbide (SiC) or platinum (Pt)/silicon carbide (SiC). Fillers may also include metals.

"Filler", as used herein in conjunction with metal matrix composites and/or metal removal from composite bodies, is intended to include either single constituents or mixtures of constituents which are substantially non-reactive with and/or of limited solubility in the matrix metal and may be single or multi-phase. Fillers may be provided in a wide variety of forms, such as powders, flakes, platelets, microspheres, whiskers, bubbles, fibers, particulates, fiber mats, chopped fibers, spheres, pellets, tubules, refractory cloth, etc., and may be either dense or porous. "Filler" may also include ceramic fillers, such as alumina or silicon carbide, as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum matrix metal. Fillers may also include metals.

"Infiltrating Atmosphere", as used herein, means that atmosphere which is present which interacts with at least one metallic component in the metallic constituent and/or preform (or filler material) and/or infiltration enhancer precursor and/or infiltration enhancer and permits or enhances spontaneous infiltration of at least a portion of the metallic constituent to occur.

EP 0 566 688 B1

"Infiltration Enhancer", as used herein, means a material which promotes or assists in the spontaneous infiltration of at least a portion of a metallic constituent into a filler material or preform. An infiltration enhancer may be formed from, for example, (1) a reaction of an infiltration enhancer precursor with an infiltrating atmosphere to form a gaseous species and/or (2) a reaction product of the infiltration enhancer precursor and the infiltrating atmosphere and/or (3) a reaction product of the infiltration enhancer precursor and the filler material or preform and/or (4) a reaction product of the infiltration enhancer precursor and the matrix metal. Moreover, the infiltration enhancer may be supplied directly to at least one of the filler material or preform of filler material, and/or metallic constituent, and/or infiltrating atmosphere and function in a substantially similar manner to an infiltration enhancer which has formed as a reaction between an infiltration enhancer precursor and another species. Ultimately, at least during the spontaneous infiltration, the infiltration enhancer should be located in at least a portion of, or on, the filler material or preform of filler material to achieve spontaneous infiltration.

"Infiltration Enhancer Precursor" or "Precursor to the Infiltration Enhancer", as used herein, means a material which when used in combination with the metallic constituent or at least a metal component of the metallic constituent, and/or preform and/or infiltrating atmosphere forms an infiltration enhancer which induces or assists the metallic constituent or at least a metal component of the metallic constituent to spontaneously infiltrate the filler material or preform. Without wishing to be bound by any particular theory or explanation, it appears as though it may be necessary for the precursor to the infiltration enhancer to be capable of being positioned, located or transportable to a location which permits the infiltration enhancer precursor to interact with the infiltrating atmosphere and/or the preform or filler material and/or metallic constituent or at least a metal component of the metallic constituent. For example, in some metallic components or metallic constituents/infiltration enhancer precursor/infiltrating atmosphere systems, it is desirable for the infiltration enhancer precursor to volatilize at, near, or in some cases, even somewhat above the temperature at which at least a portion of the metallic constituent becomes molten. Such volatilization may lead to: (1) a reaction of the infiltration enhancer precursor with the infiltrating atmosphere to form a gaseous species which enhances wetting of the filler material or preform by the metallic constituent or at least a metal component of the metallic constituent; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting; and/or (4) a reaction of the infiltration enhancer precursor with the metallic constituent or at last a metal component of the metallic constituent which forms a solid, liquid or gaseous infiltration enhancer in at least a portion of the filler material or preform which enhances wetting.

"Metallic Component or Metallic Constituent/Infiltration Enhancer Precursor/Infiltrating Atmosphere System" or "Spontaneous System", as used herein, refers to that combination of materials which exhibit spontaneous infiltration into a preform or filler material. It should be understood that whenever a "/" appears between an exemplary metallic component or metallic constituent, infiltration enhancer precursor and infiltrating atmosphere that the "/" is used to designate a system or combination of materials which, when combined in a particular manner, exhibits spontaneous infiltration into a preform or filler material.

"Metallic Component" or "Metal Component", as used herein, means a portion of or substantially all of the metallic constituent within a composite body which may be caused to spontaneously infiltrate a filler material or preform. For example, two metallic components of an aluminum/silicon metallic constituent would be aluminum and silicon.

"Metallic Constituent", as used herein, means any and all metallic components or phases contained within a composite body. When only one metal phase is present in a metallic constituent, reference to metallic component and metallic constituent means substantially the same thing. However, typically, reference to metallic constituent should be considered to be a general term for the combination of all metallic components and/or phases contained within a composite body.

"Metal Matrix Composite" or "MMC", as used herein, means a material comprising a two- or three-dimensionally interconnected alloy or metallic component or metallic constituent which has embedded a preform or filler material.

A Metal "Different" from the Metallic Constituent or Metallic Component means a metal which does not contain, as a primary component, the same metal as the metallic constituent or metallic component (e.g., if the primary component of the metallic component is aluminum, the "different" metal could have a primary component of, for example, nickel).

"Preform" or "Permeable Preform", as used herein, means a porous mass of filler or filler material which is manufactured with at least one surface boundary which may define a boundary for infiltration of

7

metallic component or metallic constituent, such mass retaining sufficient shape integrity and green strength to provide dimensional fidelity prior to being infiltrated. The mass should be sufficiently porous to accommodate spontaneous infiltration of the metallic component or metallic constituent thereinto. A preform typically comprises a bonded array or arrangement of filler, either homogeneous or heterogeneous, and may be comprised of any suitable material (e.g., ceramic and/or metal particulates, powders, fibers, whiskers, etc., and any combination thereof). A preform may exist either singularly or as an assemblage.

"Reactive Filler", as used herein in conjunction with metal matrix composite bodies, means that the filler interacts with molten parent metal or molten matrix metal or molten metallic constituent, or at least one molten component of the metallic constituent (e.g., is reduced by the parent metal and/or oxidation reaction product and thus modifies the composition of the parent metal and/or provides an oxidant for formation of the oxidation reaction product).

"Spontaneous Infiltration", as used herein, means that the infiltration of metallic component or metallic constituent into the permeable mass of filler or preform occurs without the requirement for the application of pressure or vacuum (whether externally applied or internally created).

Brief Description of the Figures

The following Figures are provided to assist in understanding the invention, but are not intended to limit the scope of the invention. Similar reference numerals have been used wherever possible in each of the Figures to denote like components, wherein:

Figure 1a is a schematic cross-sectional representation of a typical lay-up for removing at least one metallic component of a metallic constituent from substantially all surfaces of a composite body;

Figure 1b is a schematic cross-sectional representation of a typical lay-up for selectively removing at least one metallic component of a metallic constituent from a portion of a composite body;

Figure 2 is a schematic cross-sectional representation of a typical lay-up for selectively removing at least one metallic component of a metallic constituent from an interior cavity of a composite body;

Figure 3 is a schematic cross-sectional representation of a typical lay-up for removing at least one metallic component of a metallic constituent which limits the amount of metal removed by the use of a barrier means;

Figure 4a is a photomicrograph taken at 200X of the microstructure of the ceramic matrix composite body of Example 1 (Sample A) prior to metal removal;

Figure 4b is a photomicrograph taken at 200X of the microstructure of the ceramic matrix composite body of Example 1 (Sample A) after metal removal;

Figure 5a is a photograph of the ceramic matrix composite body in Example 5 prior to metal removal;

Figure 5b is a photograph of the ceramic matrix composite body in Example 5 after metal removal;

Figure 6a is a photomicrograph taken at 1000X of the microstructure of the ceramic matrix composite body of Example 5 prior to metal removal;

Figure 6b is a photomicrograph taken at 1000X of the microstructure of the ceramic matrix composite body of Example 5 after metal removal;

Figure 7a is a schematic cross-sectional view of a wollastonite shell on the trough-shaped preform of Example 7;

Figure 7b is a schematic cross-sectional view of the growth lay-up utilized to form the fiber reinforced ceramic composite body of Example 7;

Figure 7c is a schematic cross-sectional view of the lay-up used for removing the metallic constituent from the fiber reinforced ceramic composite body according to Example 7;

Figure 8a is a photomicrograph taken at about 1000X of the microstructure of the metal matrix composite body of Example 9 prior to metal removal;

Figure 8b is a photomicrograph taken at about 1000X of the microstructure of the metal matrix composite body of Example 9 after metal removal; and

Figure 8c is a photomicrograph taken at about 200X of the microstructure of the metal matrix composite body after metal removal.

Detailed Description of the Invention and Preferred Embodiments

The present invention relates to removing at least a portion, or substantially all, of at least one metallic component of a metallic constituent from a multi-phase composite body (e.g., a ceramic reinforced metal composite body or a metal reinforced ceramic composite body) by spontaneously infiltrating at least a portion of an adjacent mass of filler material or preform with said at least one metallic component.

Particularly, an infiltration enhancer and/or an infiltration enhancer precursor and/or an infiltrating atmosphere are in communication with the filler material or preform, at least at some point during the process, which permits said at least one metallic component of the metallic constituent in the composite body, when molten, to spontaneously infiltrate at least a portion of the adjacent filler material or preform.

With reference to Figure 1a, a composite body 20 contains ceramic particulate 21 and a metallic constituent 22. The composite body 20 is substantially completely buried within a filler material 30, which is contained within an appropriate refractory vessel 40. The filler material 30 may be any suitable material, as discussed in greater detail below, which is capable of being spontaneously infiltrated by at least one metallic component of the metallic constituent 22. An infiltrating atmosphere 50 may be provided such that it can permeate the filler material 30 and contact at least a portion of the composite body 20. The refractory container 40, and its contents, may be placed into a controlled atmosphere furnace to initiate spontaneous infiltration of at least one metallic component of the metallic constituent 22 into at least a portion of the filler material 30. In this embodiment, spontaneous infiltration of said at least one metallic component of the metallic constituent 22 may be expected to occur from substantially all surfaces of the composite body 20. Spontaneous infiltration can occur until substantially all of the metallic component of the metallic constituent has spontaneously infiltrated the filler material, assuming that the metallic component is substantially interconnected throughout the composite body, or the spontaneous infiltration can be terminated by altering at least one of the process conditions needed to achieve spontaneous infiltration.

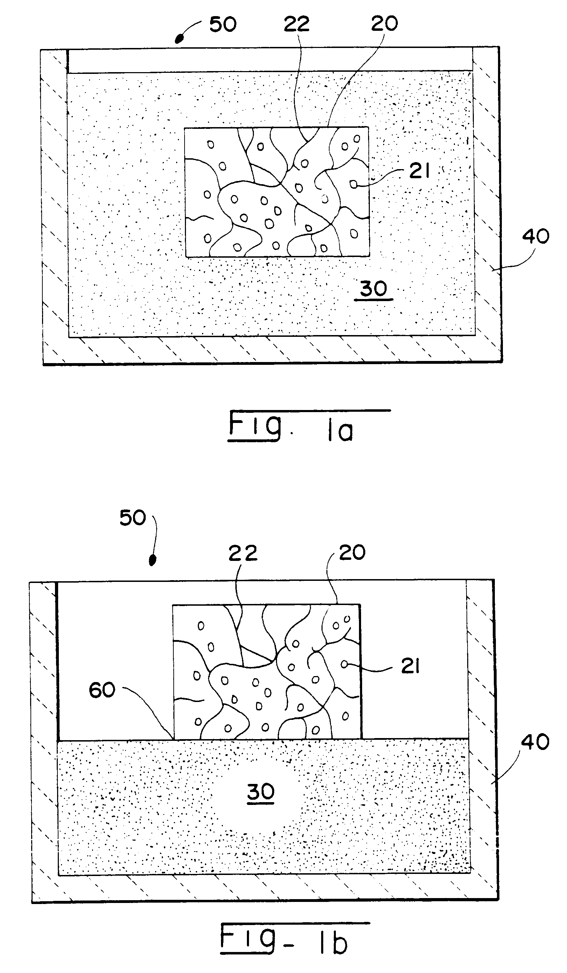

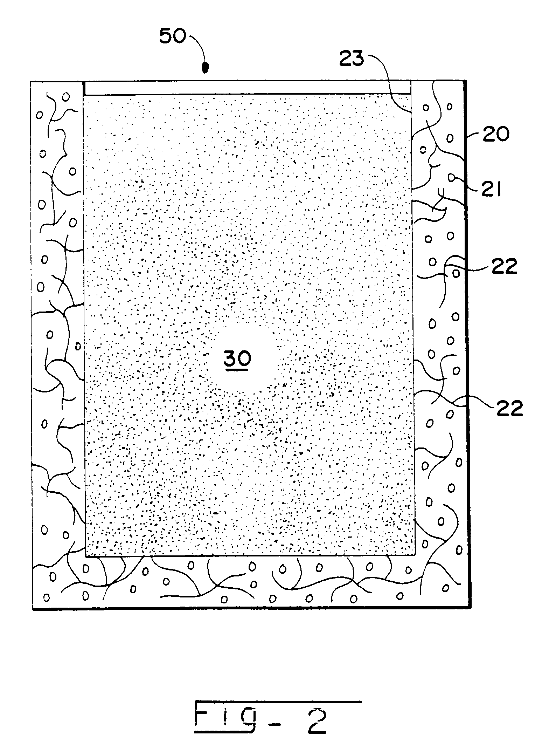

Figure 1b shows a lay-up similar to that shown in Figure 1a, however, rather than surrounding completely the composite body 20 with filler material 30, the composite body 20 is placed into limited contact with the filler material 30. In this embodiment, selective removal of at least one metallic component of the metallic constituent 22 from the composite body 20 could be expected to occur at the surface 60, which is an interface between the composite body 20 and the filler material 30. A similar embodiment to that embodiment shown in Figure 2b would be to surround the composite body 20 with filler material 30 in an amount which was intermediate between the amounts which are shown in Figure 1a and Figure 1b.

Another embodiment of the invention is shown in Figure 2. In this embodiment, a filler material 30 is placed into at least a portion of a cavity 23 contained within a composite body 20. In this embodiment, at least one metallic component of a metallic constituent 22 of the composite body 20 can be expected to spontaneously infiltrate the filler material 30, thereby providing for a selected or directed removal of said at least one metallic component of the metallic constituent 22 from the composite body 20 into substantially only the filler material 30 located within the cavity 23. If necessary, the composite body 20 could be contained within any appropriate refractory vessel during the processing thereof.

It is noted that in each of the Figures, crude representation of the metallic constituent 22 and ceramic particulate 21 have been made. It is to be understood that the metallic constituent 22 or at least one metallic component of the metallic constituent 22 could be connected in only a limited amount or could be highly interconnected. Moreover, the number and volume percent of phases present in the composite body, the chemical constituency of the phases, the size and shape of the phase(s), could vary widely. The Figures are provided only to give a general understanding of the invention and should not be construed in any manner as limiting the scope of the invention.

Without wishing to be bound by any particular theory or explanation, when an infiltration enhancer precursor is utilized in combination with at least one of the metallic constituent or at least one metallic component of the metallic constituent, and/or filler material or preform and/or infiltrating atmosphere, the infiltration enhancer precursor may react to form an infiltration enhancer which induces or assists at least one molten metallic component of the metallic constituent to spontaneously infiltrate a filler material or preform. Moreover, it appears as though it may be necessary for the precursor to the infiltration enhancer to be capable of being positioned, located or transportable to a location which permits the infiltration enhancer precursor to interact with at least one of the infiltrating atmosphere, and/or the preform or filler material, and/or molten metallic component or metallic constituent. For example, in some metallic component or metallic constituent/infiltration enhancer precursor/infiltrating atmosphere systems, it is desirable for the infiltration enhancer precursor to volatilize at, near, or in some cases, even somewhat above the temperature at which at least one metallic component of the metallic constituent becomes molten. Such volatilization may lead to: (1) a reaction of the infiltration enhancer precursor with the infiltrating atmosphere to form a gaseous species which enhances wetting of the filler material or preform by the metallic component or metallic constituent; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting; and/or (4) a reaction of the infiltration enhancer precursor with the molten metallic constituent or the molten metallic component to form a solid, liquid or gaseous infiltration enhancer in at least a portion of the filler material or preform which enhances wetting.

Thus, for example, if an infiltration enhancer precursor was included or combined with, at least at some point during the process, molten metallic component or metallic constituent, it is possible that the infiltration enhancer precursor could volatilize from the molten metallic component or molten metallic constituent and react with at least one component in the filler material or preform and/or the infiltrating atmosphere. Such reaction could result in the formation of a solid species, if such solid species was stable at the infiltration temperature, said solid species being capable of being deposited on at least a portion of the filler material or preform as, for example, a coating. Moreover, it is conceivable that such solid species could be present as a discernable solid within at least a portion of the preform or filler material. If such a solid species was formed, the molten metal may have a tendency to react (e.g., the molten metallic component or metallic constituent may chemically reduce the formed solid species) such that infiltration enhancer precursor may become associated with (e.g., dissolved in or alloyed with) the molten metal. Accordingly, additional infiltration enhancer precursor may then be available to volatilize and react with another species (e.g., the filler material or preform and/or infiltrating atmosphere) and again form a similar solid species. It is conceivable that a continuous process of conversion of infiltration enhancer precursor to infiltration enhancer followed by a reduction reaction of the infiltration enhancer with molten metal to again form additional infiltration enhancer, and so on, could occur, until the result achieved is a desirable removal of metallic component or metallic constituent from the composite body.

In order to effect spontaneous infiltration of the metallic component or metallic constituent into the filler material or preform, an infiltration enhancer should be provided to the spontaneous system. An infiltration enhancer could be formed from an infiltration enhancer precursor which could be provided (1) in the metallic constituent or in at least one metallic component of the metallic constituent; and/or (2) in the filler material or preform; and/or (3) from the infiltrating atmosphere; and/or (4) from an external source into the spontaneous system. Moreover, rather than supplying an infiltration enhancer precursor, an infiltration enhancer may be supplied directly to at least one of the filler material or preform, and/or metallic constituent or at least one metallic component of metallic constituent, and/or infiltrating atmosphere. Ultimately, at least during the spontaneous infiltration, the infiltration enhancer should be located in at least a portion of the filler material or preform.

In a preferred embodiment of the invention, it is possible that the infiltration enhancer precursor can be at least partially reacted with the infiltrating atmosphere such that the infiltration enhancer can be formed in at least a portion of the filler material or preform prior to or substantially contiguous with contacting the filler material or preform with at least a portion of the metallic constituent or at least one metallic component of the metallic constituent (e.g., if magnesium was the infiltration enhancer precursor and nitrogen was the infiltrating atmosphere, the infiltration enhancer could be a magnesium nitride which would be located in at least a portion of the preform or filler material).

An example of a metallic component or metallic constituent/infiltration enhancer precursor/infiltrating atmosphere system is the aluminum/magnesium/nitrogen system. Specifically, if an aluminum metal comprised the metallic component or metallic constituent and the aluminum metal was rendered molten, a filler material or preform could thereafter be contacted with molten aluminium metal and be spontaneously infiltrated.

Moreover, rather than supplying an infiltration enhancer precursor, an infiltration enhancer may be supplied directly to at least one of the preform or filler material, and/or metallic component or metallic constituent, and/or infiltrating atmosphere. Ultimately, at least during the spontaneous infiltration, the infiltration enhancer should be located in at least a portion of the filler material or preform.

Under the conditions employed in the method of the present invention, in the case of an aluminum metallic component/magnesium/nitrogen spontaneous infiltration system, the preform or filler material should be sufficiently permeable to permit the nitrogen-containing gas to penetrate or permeate the filler material or preform at some point during the process and/or contact the molten aluminum metallic component. Moreover, the permeable filler material or preform can accommodate infiltration of the molten aluminum metallic component, thereby causing the nitrogen-permeated preform to be infiltrated spontaneously with molten aluminum metallic component from the composite body and/or cause the nitrogen to react with an infiltration enhancer precursor to form infiltration enhancer in the filler material or preform and thereby result in spontaneous infiltration. The extent of spontaneous infiltration and depletion of aluminum metallic component from the composite body will vary with a given set of process conditions, including magnesium content of the aluminum, magnesium content of the preform or filler material, amount of magnesium nitride in the preform or filler material, the presence of additional alloying elements (e.g., silicon, iron, copper, manganese, chromium, zinc, and the like), average size of the filler material (e.g., particle diameter) or average size of the filler material comprising the preform, surface condition (e.g., impurities) and type of filler material or preform, nitrogen concentration of the infiltrating atmosphere, time permitted for infiltration and temperature at which infiltration occurs.

Thus, a metallic constituent of a composite body can be at least partially, or substantially completely, removed by causing at least one metallic component of the metallic constituent to spontaneously infiltrate a permeable mass of filler material or a preform. To achieve such spontaneous infiltration, at least a portion of the permeable mass is placed into contact with at least a portion of the metallic constituent contained within the composite body. Thus, at least a portion of the metallic constituent should be at least partially accessible, or can be made to be at least partially accessible, from at least one surface of the composite body.

Specifically, an infiltration enhancer and/or an infiltration enhancer precursor and/or an infiltrating atmosphere are in communication with the filler material or preform, at least at some point during the process, which permits the at least one metallic component of the metallic constituent of a composite body, when made molten, to spontaneously infiltrate at least a portion of the filler material or preform. In a first preferred embodiment, a precursor to an infiltration enhancer may be supplied to at least one of a portion of at least one surface of the composite body, and/or diffused into at least a portion of at least one metallic component or at least a portion of the metallic constituent of the composite body, and/or mixed into at least a portion of the filler material or preform which is placed into contact with at least a portion of the composite body, and/or contained in an infiltrating atmosphere. The supplied infiltration enhancer precursor may thereafter react with at least one of the filler material or preform, and/or at least one metallic component in the metallic constituent of the composite body, and/or the infiltrating atmosphere, thereby producing infiltration enhancer in at least a portion of, or on at least a portion of, the filler material or preform, which in turn is in contact with at least a portion of at least one surface of the composite body. Ultimately, at least during the spontaneous infiltration, infiltration enhancer should be in contact with at least a portion of the filler material or preform.

In another preferred embodiment of the invention, rather than supplying an infiltration enhancer precursor, an infiltration enhancer may be supplied directly to at least one of the filler material or preform, and/or metallic constituent of the composite body or at least one metallic component of the metallic constituent of the composite body, and/or infiltrating atmosphere. Ultimately, at least during the spontaneous infiltration, the infiltration enhancer should be in contact with at least a portion of the filler material or preform which, in turn, is in contact with at least a portion of the surface of the composite body.

In any of the above-discussed preferred embodiments, the presence of infiltration enhancer and/or infiltration enhancer precursor in at least a portion of the filler material or preform may cause at least one metallic component of the metallic constituent, or substantially all of the metallic constituent, of the composite body to spontaneously infiltrate at least a portion of the filler material or preform. The amount of or selected portion of metallic constituent which is caused to spontaneously infiltrate the filler material or preform can be controlled to achieve desirable metal removal. Specifically, substantially all metallic constituent located in a certain area within a composite body (e.g., located near a surface of the composite body) may be completely removed from that selected area thereby leaving other areas of metallic constituent within the composite body substantially undisturbed. Moreover, if the metallic constituent is substantially interconnected throughout the composite body, substantially all of the metallic constituent could be removed. The volumetric amount of metallic constituent to be removed from the composite body depends upon the ultimate application for the composite body. Thus, the present invention may be utilized merely as a surface modification process for composite products, or it could be used to remove substantially all of a metallic constituent from a composite product.

Still further, selected portions of the metallic constituent could be separately removed, leaving behind substantially undisturbed residual metallic constituent. Specifically, one or more metallic components of a multi-phase metallic constituent could be removed from selected areas of a composite body or could be removed substantially uniformly from the composite body, depending upon the ultimate application for the composite body. Such selected removal of one or more metallic components of a multi-phase metallic constituent could occur, for example, due to operating at a temperature range within which only said one or more metallic components were molten and thus were the only components that were involved in the spontaneous infiltration into the adjacent permeable mass. However, for example, if the temperature was increased to a range within which all components of the multi-phase metallic constituent were rendered molten, then the entire multi-phase metallic constituent may be removable from the composite body. Selective removal of at least one component from the multi-phase metallic constituent could provide for a grading, either slight or substantial, of the microstructure of a composite body, thus resulting in graded properties of the composite body.

In another preferred embodiment for removing at least one metallic component of a metallic constituent from at least a portion of a composite body, the composite body may be substantially completely surrounded by a filler material or preform. In this embodiment, spontaneous infiltration of the filler material or preform by at least a portion, or substantially all, of the metallic constituent could be achieved from substantially all surfaces of the composite body, so long as the metallic constituent is accessible, or could be made to be accessible, from such surfaces.

In another preferred embodiment for removing at least one metallic component of a metallic constituent from a composite body, only a portion of the composite body may be contacted with a permeable mass of filler material or preform. In this preferred embodiment, at least one metallic component of the metallic constituent could be selectively removed from that surface which is in contact with the permeable mass. In this preferred embodiment, a grading of the properties of the composite body may be achieved by varying the volume percent of metallic constituent present from, for example, one side of the composite body to an opposite side of the composite body. Thus, this grading of volume percent of metallic constituent within a composite body could permit the composite body to be utilized for a number of different conventional applications. Still further, by contacting only a portion of a composite body with a filler material or preform, any surface irregularities which may result from the removal of metallic constituent from a composite body can be substantially confined to that portion of the composite body which contacts the filler material or preform.

In another preferred embodiment; the amount of infiltration enhancer and/or infiltration enhancer precursor which is supplied to, for example, the filler material or preform, can be varied from one point in the filler material or preform to another point. Specifically, the amount of spontaneous infiltration of at least one metallic component of the metallic constituent in the composite body into an adjacent filler material or preform may be controlled by controlling the amount of infiltration enhancer and/or infiltration enhancer precursor provided in the filler material or preform. Thus, for example, by supplying a greater amount of infiltration enhancer precursor and/or infiltration enhancer to one side of a composite body relative to a different side of a composite body, the rate and/or amount of spontaneous infiltration of at least one metallic component of the metallic constituent in the composite body can be selectively controlled. Likewise, by controlling the amount of infiltrating atmosphere supplied to, for example, different portions of the filler material or preform which are in contact with the metallic constituent of the composite body, the amount of spontaneous infiltration and/or rate of spontaneous infiltration can also be selectively controlled. Still further, by controlling the temperature of different portions of the filler material or preform and/or composite body, the amount of spontaneous infiltration can also be selectively controlled.

For example, if the metallic constituent of a composite body comprises aluminum and, if the aluminum contained, or was caused to contain, by any suitable means, at least about 0.1 percent by weight, and preferably at least about 1-3 percent by weight, magnesium, based on alloy weight, the magnesium could function as the infiltration enhancer precursor and permit spontaneous infiltration to occur in the presence of, for example, a nitrogenous atmosphere. Additionally, auxiliary elements contained within, or exposed to the metallic constituent, may affect the minimum amount of magnesium required in the aluminum metal to result in spontaneous infiltration of the filler material or preform. Loss of magnesium from the spontaneous system due to, for example, volatilization should not occur to such an extent that no magnesium was present to form infiltration enhancer. Thus, it is desirable to utilize a sufficient amount of initial elements (e.g., magnesium) to assure that spontaneous infiltration will not be adversely affected by volatilization. Still further, the presence of magnesium in the preform (or filler material) and/or on at least a portion of a surface of the composite body, may result in a reduction or substantially complete elimination of the need for magnesium to be present in the metallic constituent to achieve spontaneous infiltration (discussed in greater detail later herein).

The volume percent of nitrogen in the infiltrating atmosphere also affects spontaneous infiltration rates. Specifically, if less than about 10 volume percent of nitrogen is present in the atmosphere, very slow or little spontaneous infiltration will occur. It has been discovered that it is preferable for at least about 50 volume percent of nitrogen to be present in the atmosphere, thereby resulting in, for example, shorter infiltration times due to a much more rapid rate of infiltration. The infiltrating atmosphere (e.g., a nitrogen-containing gas) can be supplied directly to the filler material or preform and/or aluminum metallic constituent, or it may be produced or result from a decomposition of a material.

The minimum magnesium content required in the aluminum/magnesium/nitrogen spontaneous system for the molten aluminum to infiltrate a filler material or preform depends on one or more variables such as the processing temperature, time, the presence of auxiliary alloying elements such as silicon or zinc, the nature of the filler material, the location of the magnesium in one or more components of the spontaneous system, the nitrogen content of the atmosphere, and the rate at which the nitrogen atmosphere flows. Lower

12

temperatures or shorter heating times can be used to obtain spontaneous infiltration as the magnesium content of the aluminum metallic constituent and/or contained in the preform is increased. Also, for a given magnesium content, the addition of certain auxiliary alloying elements into a metallic constituent, such as zinc, permits the use of lower temperatures. For example, a magnesium content of the aluminum metallic constituent at the lower preferred end of the operable range, e.g., from about 1 to 3 weight percent, may be used in conjunction with at least one of the following: an above-minimum processing temperature, a high nitrogen concentration, or one or more auxiliary alloying elements. When no magnesium is added to the preform, aluminum metallic constituent containing, or exposed to, from about 3 to 5 weight percent magnesium are preferred on the basis of their general utility over a wide variety of process conditions, with at least about 5 percent being preferred when lower temperatures and shorter times are employed. Magnesium contents in excess of about 10 percent by weight of the aluminum metallic constituent may be employed to moderate the temperature conditions required for infiltration. The magnesium content may be reduced when used in conjunction with an auxiliary alloying element, but these elements serve an auxiliary function only and are used together with at least the above-specified minimum amount of magnesium. Thus, it is possible to determine the amount of, for example, magnesium which may be required to achieve spontaneous infiltration behavior in the aluminum/magnesium/nitrogen spontaneous system. Accordingly, a metallic constituent in a metal reinforced ceramic body or in a ceramic reinforced metal body can be manufactured so as to contain the required amount of magnesium.

It is also noted that it is possible to supply to the spontaneous system, infiltration enhancer precursor and/or infiltration enhancer on a surface of the composite body and/or on a surface of the preform or filler material and/or within the preform or filler material prior to infiltrating the metallic constituent or at least one metallic component of the metallic constituent into the filler material or preform (i.e., it may not be necessary for the supplied infiltration enhancer or infiltration enhancer precursor to be alloyed with the metallic constituent, but rather, simply be supplied to the spontaneous system). For example, in the aluminum/magnesium/nitrogen system, if the magnesium was applied to a surface of the composite body it may be preferred that the surface should be the surface which is closest to, or preferably in contact with, the permeable mass of filler material or vice versa; or such magnesium could be mixed into at least a portion of the preform or filler material. Still further, it is possible that some combination of surface application, alloying and/or placement of magnesium into at least a portion of the filler material or preform of filler material could be used. Such combination of applying infiltration enhancer(s) and/or infiltration enhancer precursor(s) could result in a decrease in the total weight percent of magnesium needed to promote infiltration of the aluminum metallic component into the filler material or preform of filler material, as well as achieving lower temperatures at which infiltration can occur.

The use of one or more auxiliary alloying elements and the concentration of nitrogen in the surrounding gas also affects the extent of nitriding of the metallic constituent or at least one metallic component of metallic constituent at a given temperature. For example, auxiliary alloying elements such as zinc or iron included in the metallic constituent and/or placed on a surface of the composite body, and/or mixed within the filler material or preform, may be used to reduce the infiltration temperature and/or increase the amount or rate of infiltration at a particular temperature.

The concentration of magnesium in the metallic constituent, and/or placed onto a surface of the composite body, and/or combined in the filler or preform material, also tends to affect the extent and/or rate of infiltration at a given temperature. Consequently, in some cases where little or no magnesium is contacted directly with the preform or filler material, it may be preferred that at least about three weight percent magnesium be included in the metallic constituent. Alloy contents of less than this amount, such as one weight percent magnesium, may require higher process temperatures or an auxiliary alloying element for infiltration. The temperature required to effect the spontaneous infiltration process of this invention may be lower: (1) when the magnesium content of the metallic constituent alone is increased, e.g., to at least about 5 weight percent; and/or (2) when alloying constituents are mixed with the permeable mass of filler material or preform; and/or (3) when another element such as zinc or iron is present somewhere in the system. The temperature also may vary with different filler materials. In general, in the aluminum metallic component/magnesium/nitrogen spontaneous system, spontaneous and progressive infiltration will occur at a process temperature of at least about 675°C, and preferably at a process temperature of at least about 750°C-850°C. Temperatures generally in excess of 1200°C do not appear to benefit the process, and a particularly useful temperature range has been found to be from about 675°C to about 1000°C. However, as a general rule, the spontaneous infiltration on temperature is a temperature which is above the melting point of at least one metallic component of the metallic constituent but below the volatilization temperature of said metallic component. Moreover, the spontaneous infiltration temperature should be below the melting point of the filler material. Still further, as temperature is increased, the tendency to form a reaction product between at least one metallic component of the metallic constituent and the infiltrating atmosphere increases (e.g., in the case of aluminum metallic component and a nitrogen infiltrating atmosphere, aluminum nitride may be formed). Such reaction product may be desirable or undesirable. Additionally, electric resistance heating is typically used to achieve the infiltrating temperatures. However, any heating means which can cause said at least one metallic component to become molten and does not adversely affect spontaneous infiltration, is acceptable for use with the invention.

In the present method, for example, a permeable filler material or preform comes into contact with molten aluminum component of the composite body in the presence of, at least sometime during the process, a nitrogen-containing gas. The nitrogen-containing gas may be supplied by maintaining a continuous flow of gas into contact with at least one of the filler material or preform and/or molten aluminum or by containing the preform or filler material in a closed or static atmospheric system. Although the flow rate of the nitrogen-containing gas is not critical (e.g., flowing nitrogen may not even be essential), it is preferred that a flow rate be established such that, for example, the flow rate is sufficient to compensate for any nitrogen lost from the atmosphere due to any nitride formation, and also to prevent or inhibit the incursion of air which can have an oxidizing effect on one or more metallic components of the metallic constituent.

The method of removing at least one metallic component of a metallic constituent from a composite body is applicable to a wide variety of filler materials, and the choice of filler materials will depend on such factors as the composition of the metallic constituent, the process conditions, and the reactivity of the metallic constituent with the filler material. For example, when the metallic constituent comprises aluminum, suitable filler materials include (a) oxides, e.g. alumina, magnesia, zirconia; (b) carbides, e.g. silicon carbide; (c) borides, e.g. aluminum dodecaboride, titanium diboride, and (d) nitrides, e.g. aluminum nitride, silicon nitride, and (e) mixtures thereof. Further, the filler material or preform may be homogeneous or heterogeneous. If the filler material or preform were heterogeneous, it is possible that selective removal of metallic constituent could occur. For example, under a given set of reaction conditions, one filler material could be infiltrated at a faster rate relative to another filler material. Thus, by proper choice of combination of filler materials (e.g., by using particle size and/or chemical composition) metal could be withdrawn in differing amounts from different portions of a composite body, thereby resulting in graded properties in the composite body.

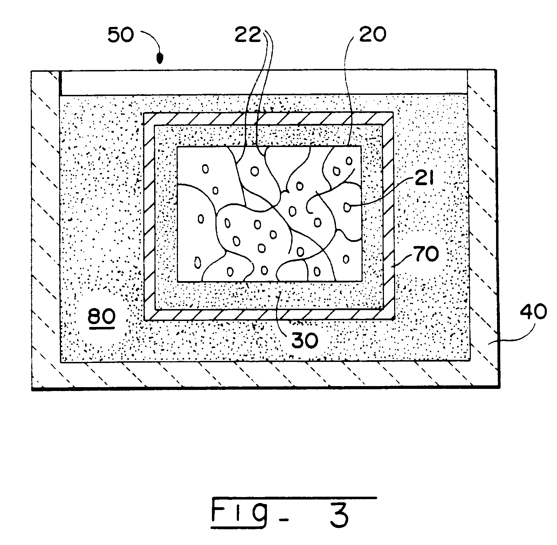

It may also be desirable to utilize a barrier means in combination with the present invention. Specifically, as shown in Figure 3, a barrier means 70 may at least partially, or substantially completely, surround a composite body 20, which itself is surrounded by a filler material 30, and contained within the barrier material 70. The barrier material 70 may than serve as a limiting means for removing metallic constituent from the composite body 20. Specifically, once spontaneous infiltration of at least one metallic component of the metallic constituent 22 of the composite body 20 had begun and had reached the barrier means 70, the barrier means 70 could prevent any further spontaneous infiltration of said metallic component from the composite body 20. Thus, the use of a barrier means may provide a control of the amount of said metallic component to be removed from the composite body 20.

As shown in Figure 3, the barrier means may be supported by a suitable substantially inert material 80. The barrier means for use with this invention may be any suitable means which interferes, inhibits, prevents or terminates the migration, movement, or the like, of molten metallic constituent beyond the surface boundary of the barrier. Suitable barrier materials may be any material, compound, element, composition, or the like, which, under the process conditions of the invention, maintains some integrity, is not volatile and preferably; at least in some cases, is permeable to the infiltration atmosphere which may be used with the process, as well as being capable of locally inhibiting, stopping, interfering with, preventing, or the like, continued infiltration or any other kind of movement beyond the surface boundary of the barrier.

Suitable barrier means includes materials which are substantially non-wettable by the migrating molten metal under the process conditions employed. A barrier of this type appears to exhibit little or no affinity for the molten metal, and movement beyond the defined surface boundary of the filler material or preform is prevented or inhibited by the barrier means. As stated above, the barrier preferably should be permeable or porous, or rendered permeable by puncturing, to permit the infiltrating atmosphere to contact the molten matrix alloy.

Suitable barriers particularly useful for aluminum metallic components are those containing carbon, especially the crystalline allotropic form of carbon known as graphite. Graphite is essentially non-wettable by the molten aluminum alloy under the described process conditions. Particular preferred graphites are graphite foil products that are sold under the trademark GRAFOIL® graphite foil, registered to Union Carbide and under the trademark PERMA-FOIL graphite foil, distributed by TTAmerica. These graphite foils exhibit sealing characteristics that prevent the migration of molten aluminum alloy beyond the defined surface boundary of the filler material. These graphite foils are also resistant to heat and are chemically inert. GRAFOIL® graphite foil and PERMA-FOIL graphite foil are flexible, compatible, conformable and resilient. They can be made into a variety of shapes to fit any barrier application. However, graphite barrier means may be employed as a colloidal suspension, a slurry or paste or even as a paint film around and on the boundary of the filler material or preform. GRAFOIL® graphite foil and PERMA-FOIL graphite foil are particularly preferred because they are in the form of a flexible graphite sheet. In use, these paper-like graphites are simply formed around the filler material or preform.

Other useful barriers for aluminum metal in nitrogen include low-volatile organic compounds applied as a film or layer onto the external surface of the filler material or preform. Upon firing in nitrogen, especially at the process conditions of this invention, the organic compound decomposes leaving a carbon soot film. The organic compound may be applied by conventional means such as by painting, spraying, dipping, etc.

Moreover, finely ground particulate materials can function as a barrier so long as infiltration of the particulate material would occur at a rate which is slower than the rate of infiltration of the filler material.

Thus, the barrier means may be applied by any suitable means, such as by covering the defined surface boundary with a layer of the barrier means. Such a layer of barrier means may be applied by painting, dipping, silk screening, evaporating, or otherwise applying the barrier means in liquid (e.g., colloidal graphite suspension), slurry, or paste form, or by sputtering a vaporizable barrier means, or by simply depositing a layer of a solid particulate barrier means, or by applying a solid thin sheet or film of barrier means onto the defined surface boundary. With the barrier means in place, spontaneous infiltration substantially terminates when the infiltrating metal reaches the defined surface boundary and contacts the barrier means.

Various demonstrations of the present invention are included in the Examples immediately following. However, these Examples should be considered as being illustrative and should not be construed as limiting the scope of the invention as defined in the appended claims.

Example 1

A ceramic matrix composite body made substantially in accordance with the teachings contained in U.S. Patent No. 4,851,375, was formulated. Specifically, the ceramic matrix composite body comprised a 500 grit (average particle diameter of about 17 microns) silicon carbide reinforcement which had been embedded by an oxidation reaction product matrix comprising alumina and a metallic component comprising an aluminum alloy which was at least partially three dimensionally interconnected in the composite body.

After formation of the silicon carbide particulate reinforced alumina composite body had been achieved, the metal removal process was effected. Specifically, a material mixture was formed, comprising by weight about 90 percent filler, which consisted of 1000 grit (average particle diameter of about 5 microns) $Al_2O_3$ - (E67 tabular alumina, Norton Co., Worcester, MA) and about 10 percent -325 mesh (particle diameter less than about 45 microns) magnesium powder (AESAR®, Johnson Matthey, Seabrook, NH). The material mixture was mixed in a plastic jar on a rotating jar mill for about an hour.

Two graphite foil boxes having inner cavities measuring about 3 inches (76 mm) long, about 3 inches (76 mm) wide and about 2.5 inches (64 mm) deep were made from graphite foil (PERMA-FOIL, TTAmerica, Portland, OR). The graphite foil boxes were made from pieces of graphite foil, measuring about 8 inches (203 mm) long by about 8 inches (203 mm) wide and about 0.15 inches (4 mm) thick. Four parallel cuts about 2.5 inches (64 mm) from the side and about 2.5 inches (64 mm) long, were made into the graphite foil. The graphite foil was then folded into the graphite foil box and stapled together. Sample A, referred to in Table 1, was prepared for treatment by first pouring about 0.5 inch (13 mm) of the mixture of filler material and magnesium powder into one of the graphite foil boxes. The filler material mixture was level led and hand tapped until smooth. A bar of the silicon carbide particulate reinforced alumina composite discussed above, and measuring about 1.7 inches (43.8 mm) long by about 0.25 inch (6.3 mm) wide and about 0.2 inch (4.5 mm) thick was placed onto the filler material mixture within the graphite foil box and covered with about another 0.5 inch (13 mm) of the filler material mixture which was again level led and hand tapped until smooth.

Sample B, not specifically referred to in any Table, was prepared for treatment by first pouring about one inch (25 mm) of the same filler material mixture used for Sample A into the second graphite foil box. The filler material mixture was levelled and again hand tapped until smooth. Another silicon carbide particulate reinforced composite, discussed above, measuring about 1.7 inches (43 mm) long by about 0.25 inch (6.3 mm) wide and about 0.2 inch (4.5 mm) thick was placed onto the filler material mixture and forced into the filler material mixture such that five sides of the composite body contacted the filler material mixture (i.e., was buried within the filler material mixture) and one side of the composite body measuring about 0.25 inch (6.3 mm) by about 1.7 inches (43 mm) was substantially flush with the surface of the filler material mixture and thus would be exposed to the infiltrating atmosphere, when supplied.

Both graphite foil boxes containing Samples A and B, respectively, were then placed into a solid graphite refractory container having inner dimensions of about 9 inches (229 mm) long, about 9 inches (229 mm) wide, about 5 inches (127 mm) deep and having a wall thickness of about 0.5 inch (13 mm). The graphite refractory container and its contents were then placed into a controlled atmosphere resistance heated furnace, the furnace door was closed and the furnace was evacuated to at least about 30 inches (762 mm) of mercury vacuum. After about 15 hours at about 30 inches of mercury vacuum, the vacuum was shut off and nitrogen gas was introduced into the furnace chamber at a flow rate of about 2 liters/minute. The operating pressure of the chamber was about 16.7 pounds per square inch (1.2 kg/cm$^2$) with a nitrogen flow rate of about 2 liters/minute. The furnace was heated to about 850°C in about 4 hours. After about 10 hours at about 850°C, the power to the furnace was interrupted and the graphite refractory container and its contents were allowed to cool within the furnace to about room temperature. Once at room temperature, the graphite refractory container and its contents were removed and the lay-ups for each of Sample A and Sample B were disassembled to reveal that the metallic constituent comprising an aluminum alloy in each of the silicon carbide particulate reinforced alumina composite had been drawn out from each composite body during the process.

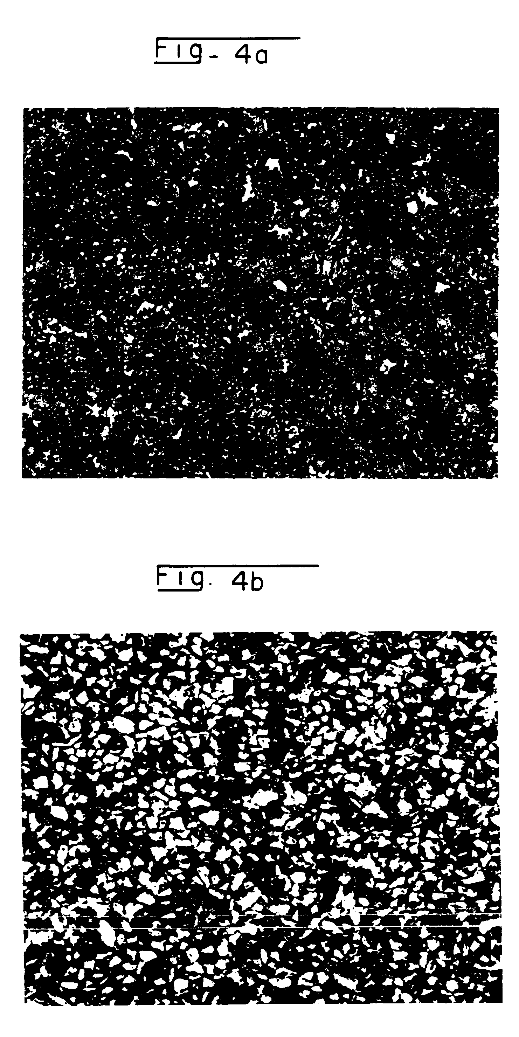

Thus, this Example demonstrates that the metallic constituent of a composite body can be drawn out by processing the body in a filler material mixture comprising a substantially inert component and an infiltration enhancer precursor. Moreover, this Example demonstrates that the metallic constituent of a composite body can be removed either by surrounding a composite body with a filler material mixture or by selectively contacting the filler material mixture with a surface of the composite body and thus, directionally removing at least a portion of the metallic constituent from the composite body. Specifically, Figure 4a is a photomicrograph taken at about 200x of the microstructure of the silicon carbide particulate reinforced alumina composite prior to metal removal and Figure 4b is a photomicrograph taken at about 200x of the microstructure of the silicon carbide particulate alumina composite after metal removal.

Example 2

This Example illustrates that a variety of filler material mixtures comprising a substantially inert filler material or a reactive filler material can be used in combination with an infiltration enhancer precursor to remove at least a portion of a metallic constituent from metal reinforced ceramic composites (i.e., ceramic matrix composites). Specifically, the substantially inert filler materials used in this Example include $Al_2O_3$, BN, and SiC coated BN, while the substantially reactive filler material used in this Example includes PYREX® glass powder (Corning Glass Works, Corning, NY).

Table I contains the experimental parameters for Samples A, C, D, and E. Specifically the Table contains a description of the ceramic matrix composite body (which was substantially the same as the ceramic composite body discussed in Example 1) from which the metallic constituent was removed, the dimensions of the ceramic matrix composite body, the weight of the filler material, the weight percent of infiltration enhancer precursor added to the filler material to form the filler material mixture, the processing temperature, the processing time at the processing temperature and the processing atmosphere. Figure 1a shows a cross-sectional schematic view of a setup similar to the ones used for this Example.

The setups comprised a graphite refractory container, which contained a filler material mixture comprising a substantially inert

TABLE I

| Sample ID | Composite | Geometry | Filler Material | Infiltration Enhancer Precursor | Processing Temperature | Processing Time At Processing Temperature | Atm. |
|---|---|---|---|---|---|---|---|
| A | 500 grit SiC$_p$/Al$_2$O$_3$[1] | 5x6x43 mm bar | 1000 grit Al$_2$O$_3$[2] | 10%-325 mesh Mg[3] | 850°C | 10h | N$_2$ |
| C | 500 grit SiC$_p$/Al$_2$O$_3$[1] | 3x5x6 mm bar | BN[4] | 10%-325 mesh Mg | 850°C | 24h | N$_2$ |
| D | 500 grit SiC$_p$/Al$_2$O$_3$[1] | 3x5x6 mm bar | SiC-coated BN[6] | 10%-325 mesh Mg | 850°C | 24h | N$_2$ |
| E | 500 grit SiC$_p$/Al$_2$O$_3$[1] | 5x6x43 mm bar | glass powder[5] | 10%-325 mesh Mg | 650°C | 10h | N$_2$ |

1 SiC particulate reinforced alumina composite.
2 E-67, Norton Co., Worcester, MA.
3 AESAR®, Johnson Matthey Corporation, Seabrook, New Hampshire
4 SOHIO/Carborundum Company, Niagra Falls, New York
5 PYREX® glass powder, Corning Glass Work, Corning, New York
6 Synterials Corporation, Harndon, Virginia

filler material and an infiltration enhancer precursor, in the relative amounts shown in Table I, and which surrounded the SiC particulate reinforced alumina body, as shown in Figure 1a. Each setup corresponding to Samples C, D, and E (note that Sample A was discussed in Example 1) were placed into a resistant heated controlled atmosphere furnace and nitrogen was introduced into the furnace at a flow rate of about 0.5 liters/minute. The furnace was then heated to the processing temperature, as specified in Table I, at a rate of about 200°C/hour, held at the respective processing temperatures for the respective processing

EP 0 566 688 B1

times shown in Table I, during which time the metallic constituent from within the ceramic matrix composite body spontaneously infiltrated the filler material mixture. After processing each of the samples for the respective times shown in Table 1, the furnace was cooled to about room temperature. Once at room temperature, each setup was removed from the furnace and disassembled. It was noted that for Samples A, C, D, and E, substantially all of the metallic constituent had been removed from each ceramic matrix composite body.

Example 3

This Example illustrates that varying amounts of an infiltration enhancer precursor can be combined with a filler material, to make a filler material mixture, so that at least a portion of the metallic constituent can be removed from ceramic matrix composite bodies. In this Example -325 mesh (particle diameter less than about 45 $\mu$m) magnesium powder (AESAR®, Johnson Matthey Corp., Seabrook, NH) was used as the infiltration enhancer precursor.

Table II contains the experimental parameters for Samples A, F, G, and H. Specifically, Table II contains the ceramic matrix composite body from which at least a portion of the metallic constituent was removed, the dimensions of the ceramic matrix composite body, the weight percent of filler material, the weight percent of infiltration enhancer precursor added to the filler material to form the filler material mixture, the processing temperature, the processing time at processing temperature, and the processing atmosphere. The ceramic matrix composite bodies utilized in this Example and the method for forming the filler material mixtures were substantially the same as that described for Sample A in Example 1.

The refractory containers for Samples F, G, and H were high density alumina crucibles having an inner diameter of about 2.3 inches (59 mm), a depth of about 2.3 inches (5.9 mm) and a wall thickness of about 0.04 inch (1 mm). Figure 1a shows a cross-sectional schematic view of the setup used for Sample F, G, and H to remove the metallic constituent from the silicon carbide particulate reinforced alumina composite.

The weight percentage of infiltration enhancer precursor mixed with the filler material, as shown in Table II, was about 10 weight percent for Sample A, about 20 weight percent for Sample F, about 40 weight percent for Sample G, and about 100 weight percent for Sample H.

The setup for each Sample comprised a refractory container containing the filler material mixture comprising the filler material and the infiltration enhancer precursor and surrounding the silicon carbide particulate reinforced alumina composite body. The setup was placed into a resistance heated controlled atmosphere furnace and nitrogen was introduced. The processing conditions for Sample A are described in Example 1. The processing conditions for Samples F, G, and H include flowing nitrogen at about 0.5 liters/minute. The furnace was heated to about 850°C at a rate of about 200°C/hour and held at about 850°C for about 10 hours, during which time the metallic constituent from within the ceramic matrix composite body spontaneously wetted the filler material mixture comprising the alumina filler material and the infiltration enhancer precursor. After about 10 hours at about 850°C, the furnace and its contents were cooled to about room temperature. At about room temperature, the setup was removed from the furnace and disassembled to reveal that substantially all of the metallic constituent had been removed and that Samples A, F, G, and H now comprised silicon carbide particulate reinforced alumina composites with three dimensionally interconnected porosity and an alumina matrix.

Example 4

This Example illustrates that a range of processing temperatures may be used to remove the metallic constituent from ceramic matrix

18

TABLE II

| Sample ID | Composite | Geometry | Filler Material | Infiltration Enhancer Precursor | Processing Temperature | Processing Time At Processing Temperature | Atm. |
|---|---|---|---|---|---|---|---|
| A | 500 grit SiC$_p$/Al$_2$O$_3$[1] | 5x6x43 mm bar | 1000 grit Al$_2$O$_3$[2] | 10% -325 mesh Mg[3] | 850°C | 10h | N$_2$ |
| F | 500 grit SiC$_p$/Al$_2$O$_3$[1] | 3x5x6 mm bar | 1000 grit Al$_2$O$_3$[2] | 20% -325 mesh Mg[3] | 850°C | 10h | N$_2$ |
| G | 500 grit SiC$_p$/Al$_2$O$_3$[1] | 3x5x6 mm bar | 1000 grit Al$_2$O$_3$[2] | 40% -325 mesh Mg[3] | 850°C | 10h | N$_2$ |
| H | 500 grit SiC$_p$/Al$_2$O$_3$[1] | 3x5x6 mm bar | none | 100% -325 mesh Mg[3] | 850°C | 10h | N$_2$ |

1 SiC particulate reinforced alumina composite.
2 E-67 alumina, Norton Co., Worcester, MA.
3 AESAR®, Johnson Matthey Corporation, Seabrook, New Hampshire

composite bodies according to the instant invention. Specifically, the processing temperatures in this Example were about 650°C for Sample I, about 750°C for Sample J, about 850°C for Sample K, about 950°C for Sample L, and about 1050°C for Sample M.

Table III contains the experimental parameters used for Samples I, J, K, L, and M. Specifically Table III lists the ceramic matrix composite bodies from which the metallic constituent was removed, the dimension of the ceramic matrix composite body, the filler material, the infiltration enhancer precursor, the processing temperature, the processing time at the processing temperature, and the processing atmosphere. The ceramic matrix composite bodies tested in this Example and the method for making the filler material mixture were substantially the same as that described for Sample A in Example 1.

Figure 1a shows a cross-sectional schematic view of the setup used with Samples I through M to remove the metallic constituent from the silicon carbide particulate reinforced alumina composite in this Example. Each experimental setup in Table III comprised an alumina crucible, a filler material mixture comprising a filler material and an infiltration enhancer precursor, and a silicon carbide particulate reinforced alumina composite body surrounded by the filler material mixture and contained within the alumina crucible. The alumina crucible for the setup used with Sample I was obtained from Netzche, Inc., Exton, Pennsylvania and had an inner diameter measuring about 0.23 inch (6.0 mm) wide by about 0.51 inch (13 mm) deep. The alumina crucibles for the setups used with Samples J, K, L, and M were obtained from McDanel Refractory Co., Beaver Falls, Pennsylvania and measured about 3.9 inches (100 mm) long by about 1.8 inches (45 mm) wide by about 0.75 inch (19 mm) tall.

The setups were placed into a resistance heated controlled atmosphere furnace and nitrogen was introduced. For Sample I, the nitrogen flow rate was about 0.5 liters/minute. For Samples J, K, L, and M, the nitrogen flow rate was about 1.0 liter/minute. The furnace and its contents were then heated at about 200°C per hour to about the processing temperature specified in Table III. After about the specified time in Table III at the specified temperature, during which time the metallic constituent from within the ceramic matrix composite

<u>TABLE III</u>

| Sample ID | Composite | Geometry | Filler Material | Infiltration Enhancer Precursor | Processing Temperature | Processing Time At Processing Temperature | Atm. |
|---|---|---|---|---|---|---|---|
| I | 500 grit $SiC_p/Al_2O_3$[1] | 3x5x6 mm bar | 1000 grit $Al_2O_3$[2] | 10% -325 mesh $Mg$[3] | 650°C | 1.5h | $N_2$ |
| J | 500 grit $SiC_p/Al_2O_3$[1] | 3x6x53 mm bar | 1000 grit $Al_2O_3$[2] | 10% -325 mesh $Mg$[3] | 750°C | 10h | $N_2$ |
| K | 500 grit $SiC_p/Al_2O_3$[1] | 3x6x53 mm bar | 1000 grit $Al_2O_3$[2] | 10% -325 mesh $Mg$[3] | 850°C | 10h | $N_2$ |
| L | 500 grit $SiC_p/Al_2O_3$[1] | 3x6x53 mm bar | 1000 grit $Al_2O_3$[2] | 10% -325 mesh $Mg$[3] | 950°C | 10h | $N_2$ |
| M | 500 grit $SiC_p/Al_2O_3$[1] | 3x6x53 mm bar | 1000 grit $Al_2O_3$[2] | 10% -325 mesh $Mg$[3] | 1050°C | 10h | $N_2$ |

1 SiC particulate reinforced alumina composite.
2 E-67 alumina, Norton Co., Worcester, MA.
3 AESAR®, Johnson Matthey Corporation, Seabrook, New Hampshire

body spontaneously wetted the filler material mixture comprising of the filler material and the infiltration enhancer precursor, the furnace and its contents were allowed to cool to about room temperature. At about room temperature, each setup was removed from the furnace, disassembled, and it was noted that the samples experienced a weight loss due to the removal of the metallic constituent from within the ceramic matrix composite body. The weight loss for Samples G, J, K, L, amd M indicated that substantially all of the

21

metallic constituent had been removed from the ceramic matrix composite body.

Example 5

This Example illustrates that the instant invention for removing the metallic constituent from ceramic matrix composite bodies is applicable to large and complex shaped composite bodies.

A conically shaped preform having substantially paraboloidal outer and inner surfaces and measuring about 5.0 inches (127 mm) high and having an outer diameter measuring about 4.0 inches (102 mm) at the end opposite the nose end of the conically shaped preform was slip cast from a slip mixture comprising by weight about 56.2% 1000 grit (average particle diameter of about 5 $\mu$m) fired 39 CRYSTOLON® silicon carbide (Norton Company, Worcester, Massachussetts), about 15% submicron (average particle diameter of about 0.6 $\mu$m) silicon carbide (HSC-059 or 100 GL, Superior Graphite, Chicago, Illinois), about 3.8% fired 39 CRYSTOLON® 500 grit (average particle diameter of about 17 $\mu$m) silicon carbide (Norton Company, Worcester, Massachussetts), about 24.5% water, and about 0.5% DARVAN® 821A organic dispersant (R. T. Vanderbilt Co., Inc., Norwalk, Connecticut). The fired silicon carbide was heated in an air atmosphere resistance heated furnace from about 1300°C to about 1325°C for about 48 hours. The slip mixture was placed in an about 5 gallon (19 liter) plastic container which was about half full of alumina grinding media having a diameter of about 0.5 inch (13 mm) and the plastic container and its contents were placed on a rotating jar mill for about 3 days. The slip mixture was then cast into a plaster of Paris mold having a paraboloidal inner cavity corresponding substantially to the outer surface of the desired conical shaped preform. A rubber mandrel having a paraboloidal outer surface corresponding substantially to the inner surface of the desired conical shaped preform was then inserted into the preform mixture contained within the plaster of paris mold. After about 5 hours, the rubber mandrel was removed from within the set slip mixture and the conically shaped preform was removed from the plaster of paris mold. After the conically shaped preform had dried for at least 12 hours, it was placed into an air atmosphere furnace and heated to about 1025°C in about 10 hours, held at about 1025°C for about 24 hours and cooled to about room temperature in about 10 hours.

The outer surface of the fired conically shaped preform was first sanded by hand and then coated with a barrier mixture comprising by weight about 50% -325 mesh (particle diameter less than about 45 $\mu$m) wollastonite and about 50% YK paint thinner (ZYP Coating, Oak Ridge, Tennessee). The barrier coated conically shaped preform was placed into a refractory boat such that the nose of the barrier coated conically shaped preform was against the bottom of the refractory boat and the opening of the conically shaped void within the preform was up.

The refractory boat and its contents comprising the barrier coated conically shaped preform were placed into an air atmosphere resistance heated furnace and the furnace was heated to about 1000°C in about 8 hours. A refractory crucible containing a parent metal comprising by weight about 15.0% Si, 6.0% Zn and the balance aluminum was inserted into the furnace at about 1000°C and when the parent metal had substantially completely melted, the parent metal was poured into the conically shaped void within the preform to fill the void. Additional molten parent metal was added to the conically shaped void on a daily basis throughout the about 100 hour growth at about 1000°C. After about 100 hours at about 1000°C, the conically shaped preform was observed in the furnace and it was determined that the oxidation reaction product had grown into and substantially completely embedded the silicon carbide particulate preform thereby forming a substantially net shaped silicon carbide particulate reinforced alumina conically shaped composite body. The remaining parent metal within the void of the conically shaped composite body was poured out and the power to the furnace was interrupted and the furnace containing the refractory boat containing the conically shaped composite body were allowed to cool to about room temperature. At about room temperature, the conically shaped composite body was subjected to sand blasting to remove any remnants of the barrier material on the outer surface of the conically shaped composite body and prepare it for the metallic constituent removal process of the instant application.

Figure 2 shows a portion of a cross-sectional schematic view of a set-up which is similar to that setup which was used to remove the metallic constituent from the conically shaped composite body. Specifically, Figure 2 shows a representative set-up comprising a composite body 20 (i.e., in this Example the numeral 20 represents a silicon carbide particulate reinforced, conically shaped composite body), that served as a container for the filler material mixture 30. In this Example, the filler material mixture 30, comprised by weight about 90% E67 100 grit (average particle diameter of about 173 $\mu$m) alumina (Norton Company, Worcester, Massachussetts) and about 10% -325 mesh (particle diameter less than about 45 $\mu$m) magnesium powder (AESAR®, Johnson Matthey Corporation, Seabrook, New Hampshire). The conically shaped composite body was supported on its outside portions by 38 ALUNDUM® 220 grit (average particle

22

diameter of about 66 $\mu$m) alumina (Norton Company, Worcester, Massachussetts) which was contained within a steel box, both of which are not shown in Figure 2.

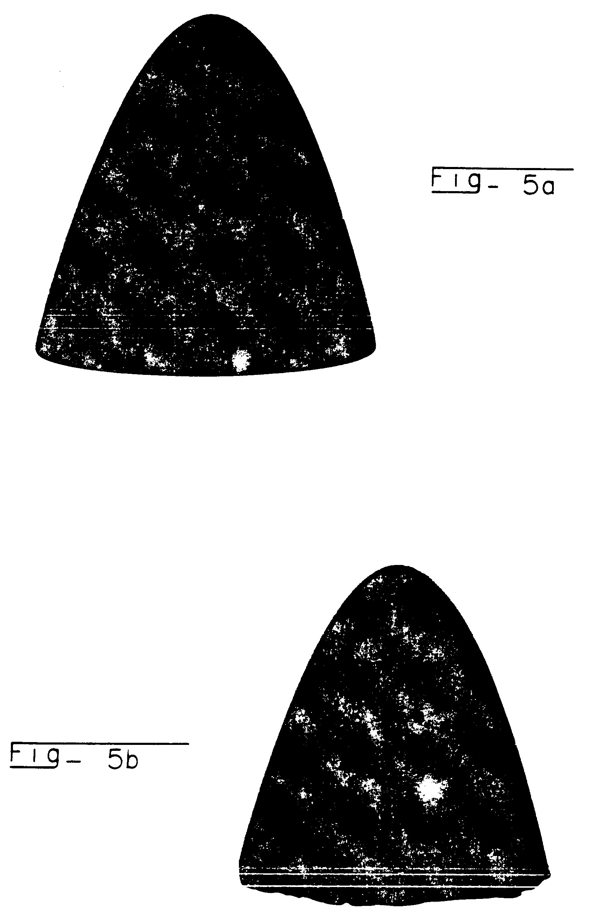

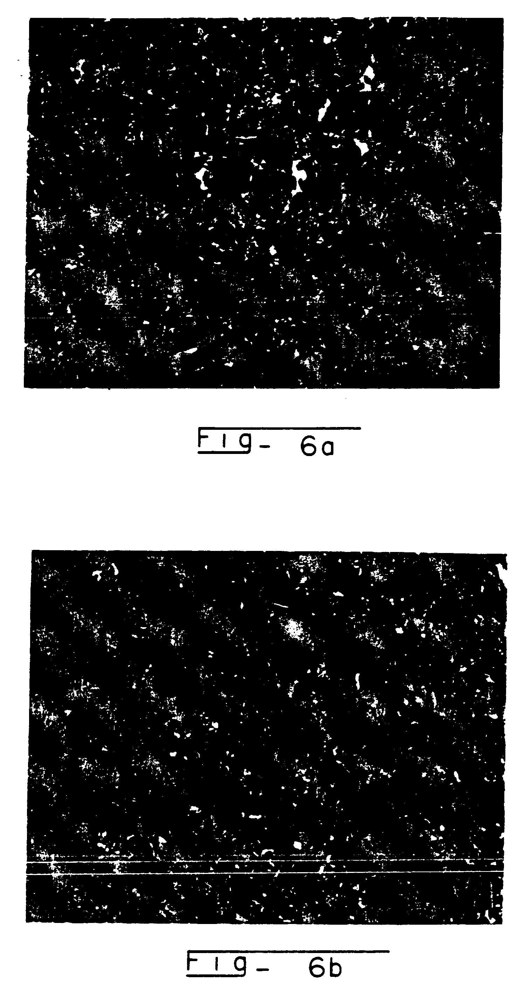

The set-up, comprising the steel box which contained 220 grit (average particle diameter of about 66 $\mu$m) alumina, which alumina supported the exterior portion of the conically shaped composite body 20, which composite body 20 also contained the filler material mixture 30, was placed into a retort-lined resistant heated furnace. The retort door was closed and nitrogen was introduced into the retort at a flow rate of about five liters per minute. The furnace and its contents were heated to about 800°C at a rate about 200°C per hour with a flow of nitrogen of about five liters per minute. After about 10 hours at about 800°C with a flow of nitrogen at about five liters per minute, the flower to the furnace was interrupted and the furnace and its contents were allowed to cool to about room temperature. At about room temperature, the retort door was opened, the set-up was removed from the furnace and disassembled to reveal that the filler material mixture adjacent to the interior surface of the conically shaped composite body now comprised an agglomerated mass comprising 1000 grit alumina, aluminum nitride, and aluminum alloy. Also, it was observed from a polished cross-section of the conically shaped composite body that the metallic constituent had been removed. Specifically, Figure 5a shows a conically shaped composite body prior to treatment by the instant invention and Figure 5b shows a conically shaped composite body after treatment by the instant invention to remove the metallic constituent. Figure 6a is a photomicrograph taken at about 1000X, which corresponds to the microstructure of the silicon carbide reinforced alumina composite prior to treatment by the instant invention. Specifically, the microstructure shows that the composite body comprises silicon carbide particulate reinforcement (shown as discrete gray regions in the micrograph), interconnected metallic channels (shown as the speckled or mottled white region in the micrograph) and an alumina matrix growth product (shown as grayish-black regions in the micrograph). In contrast, Figure 6b is a photomicrograph taken at about 1000X, which corresponds to the microstructure of a silicon carbide reinforced alumina conically shaped composite body treated by the instant invention. Specifically, the microstructure shown in Figure 6b shows that the composite body, after metal removal treatment, comprises silicon carbide particulate reinforcement (shown as discrete gray regions in the micrograph), porosity (shown as discrete black regions in the micrograph) in place of the metallic channels, some isolated residual metal (shown as speckled or mottled white regions in the micrograph), and an alumina matrix oxidation reaction product (shown as grayish-black regions in the micrograph).

Example 6

The following Example demonstrates that a fiber reinforced ceramic composite body, specifically a silicon carbide fiber reinforced aluminum nitride body grown by the directed oxidation of an aluminum nitride oxidation reaction product into a silicon carbide cloth can be treated by the method of the instant invention to remove the metallic constituent.

A graphite foil box having an inner cavity measuring about 4.0 inches (102 mm) long by about 4.0 inches (102 mm) wide by about 3.0 inches (96 mm) deep was made from a piece of graphite foil (GRAPHOIL®, Union Carbide, Carbon Products Division, Cleveland, OH) measuring about 10.0 inches (254 mm) long by about 10.0 inches (254 mm) wide by about 0.015 inch (0.38 mm) thick. Four parallel cuts, 3.0 inches (76 mm) from the side and about 3.0 inches (76 mm) long were made into the graphite foil. The cut graphite foil was then folded and stapled to form the graphite foil box.

A parent metal ingot, comprising by weight about 3 percent strontium and the balance aluminum and measuring about 4.0 inches (102 mm) long by about 4.0 inches (102 mm) wide by about 1.0 inch (25 mm) thick was coated on one side measuring about 4.0 inches (102 mm) long by about 4.0 inches (102 mm) wide with a slurry comprising by weight about 90% -325 mesh (particle diameter less than about 45 $\mu$m) aluminum alloy powder and the balance ethanol. The -325 mesh aluminum alloy powder nominally comprised by weight 7.5-9.5% Si, 3.0-4.0% Cu, <2.9% Zn, 0.2-0.3% Mg, <1.5% Fe, <0.5% Mn, <0.35% Sn, and the balance aluminum. The aluminum alloy powder-coated parent metal was then placed into the graphite foil box such that the uncoated sides of the parent metal ingot contacted the inner surfaces of the graphite foil box.

A preform measuring about 4.0 inches (102 mm) long by about 4.0 inches (102 mm) wide by about 0.06 inch (1.6 mm) thick was made within the graphite foil box and on the aluminum alloy powder-coated surface of the parent metal ingot by stacking four layers of 12 harness satin weave (HSW) silicon carbide fabric (NICALON™ obtained from Dow Corning Corporation, Midland, Michigan) onto the parent metal. About 0.5 inch (13 mm) of a 500 grit (average particle diameter of about 17 $\mu$m) alumina powder (El ALUNDUM® alumina, Norton Company, Worcester, Massachussetts) was poured over the 12-HSW fabric preform and leveled. The sides of the graphite foil box that extend beyond the level of the alumina powder on top of the 12-HSW fabrics were folded over onto the alumina powder to form a lid for the graphite foil box.

A lay-up was formed in a graphite refractory container by placing and leveling about 0.5 inch (13 mm) of a 500 grit (average particle diameter of about 17 $\mu$m) alumina powder into the bottom of the graphite refractory container. The graphite foil box and its contents comprising the aluminum alloy powder-coated parent metal ingot and the 12-HSW silicon carbide fabric preform were placed into the graphite refractory container and onto the 500 grit alumina. Additional 500 grit alumina was placed into the graphite refractory container in the space defined between the inner surface of the graphite refractory container and the outer surface of the graphite foil box. The 500 grit alumina powder also covered the top of the graphite foil box and its contents.

The lay-up comprising the graphite refractory container was placed into a retort-lined resistance heat furnace and the retort door was closed. The furnace and its contents were heated to about 100°C at a rate of about 300°C per hour. At about 100°C, the retort was evacuated to about 30.0 inches (762 mm) mercury (Hg) and maintained at about 30.0 inches (762 mm) Hg to about 150°C. At about 150°C, nitrogen was introduced into the retort at a flow rate of about 4 liters per minute. The furnace and its contents were then heated to about 900°C at about 300°C per hour. After about 200 hours at about 900°C, the furnace and its contents were cooled to about room temperature at a rate of about 300°C per hour. At about room temperature, the retort door was opened and the lay-up was removed. The lay-up was disassembled, the preform was removed from within the graphite foil box, and it was observed that an oxidation reaction product comprising aluminum nitride had grown into and substantially completely embedded the silicon carbide fiber preform thereby forming a ceramic matrix composite body having a plurality of fabric layers of 12-HSW NICALON™ silicon carbide as reinforcement.

After formation of the silicon carbide fiber reinforced aluminum nitride composite body had been achieved, the metal removal process was effected. Specifically, a material mixture was formed, comprising about 90 percent by weight filler, which included 1000 grit (average particle diameter of about 5 $\mu$m) $Al_2O_3$ (E67 tabular alumina, Norton Co., Worcester, MA) and about 10 percent by weight -325 mesh (particle diameter less than about 45 $\mu$m) magnesium powder (AESAR®, Johnson Matthey, Seabrook, NH). The material mixture was mixed in a plastic jar on a rotating jar mill for about an hour.

The setups for the removal of the metallic constituent from the silicon carbide fiber reinforced aluminum nitride composite was substantially the same as that described in Example 1 and Figure 1a shows a schematic view of an apparatus which is similar to the setup which was used to effect removal of the metallic constituent. The nitrogen flow rate to effect removal of the metallic constituent from silicon carbide fiber reinforced aluminum nitride was about two liters per minute. The controlled atmosphere furnace was heated to about 750°C at a rate of about 200°C per hour, held at about 750°C for about 10 hours. After about 10 hours at about 750°C and during which time, at least a portion of the metallic constituent was removed from within the ceramic matrix composite body by spontaneously infiltrating the filler material mixture comprising a 1000 grit (average particle diameter of about 5 $\mu$m) alumina and about a -325 mesh (particle diameter less than about 45 $\mu$m) magnesium powder, the furnace and its contents were cooled to about room temperature. At about room temperature, the set-up was removed from the furnace, disassembled, and a weight loss due to the removal of the metallic constituent was noted.

Example 7

This Example demonstrates that the method of the instant invention can be used in conjunction with fiber reinforced ceramic composite bodies formed by the directed oxidation of a parent metal to embed a fiber cloth preform.

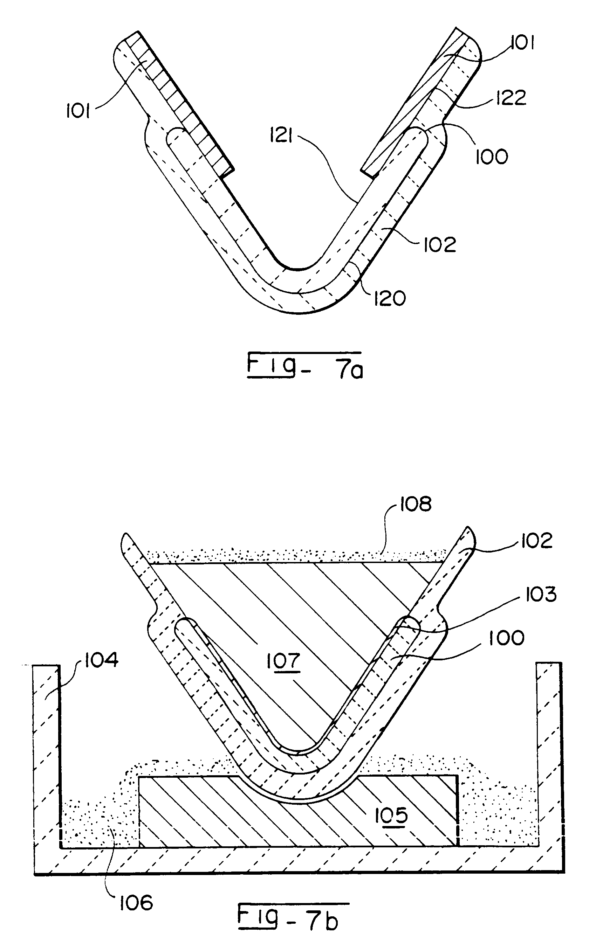

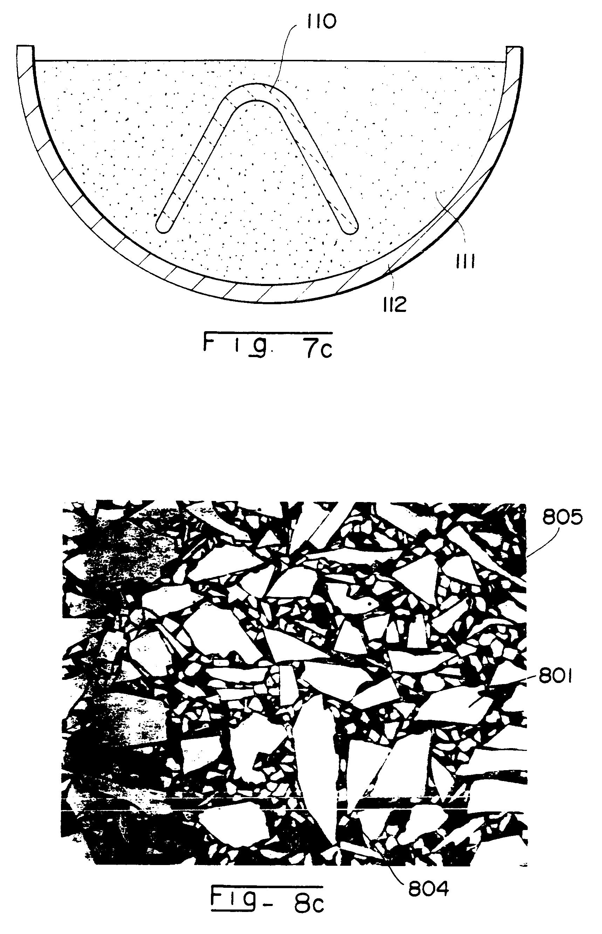

Figure 7a shows a schematic cross-sectional view of a trough-shaped preform 100 measuring about 9 inches long (228.6 mm) and about 1 inch (25 mm) deep (i.e., as measured from a top portion of the trough to a bottom portion of the trough) fabricated from 8 layers of plain weave NICALON™ silicon carbide fibers (obtained from Dow Corning Corporation, Midland, MI) and having a "V"-shaped cross section. The preform 100 contained pores along an outer surface 120 which were impregnated with molten red wax (Yates Manufacturing Co.; Chicago, IL). Strips 101 of high temperature wax sheet having an adhesive backing on one side (Kit Collin Company, Cleveland, OH) and measuring about 9 inches (227 mm) long, about 2-2.25 inches (51-57 mm) wide and about 0.25 inch (6.4) thick were attached by the adhesive portion thereon to a portion of an inner surface 121 of the trough-shaped preform, thereby extending the length of each side of the "V"-shaped preform to extend about 1.75-2.0 inches (45-51 mm), thereby forming a wax extension. A slurry mixture comprising by weight about 5 parts BLUONIC® A colloidal alumina (West Bond Corp., Wilmington, DE) and about 2 parts -325 mesh (particle diameter less than about 45 $\mu$m) wollastonite (a

calcium silicate) was made by hand mixing the materials together.

A shell 102 was formed by painting the slurry mixture onto the outer surface of the wax extension 101 and the outer surface 120 of the wax coated trough-shaped preform with a one inch foam brush. Coarse wollastonite was then sprinkled liberally onto the slurry mixture to prevent runoff and to form a first precursor layer of the shell 102. This procedure was repeated after an about 0.5 hour drying period. When the slurry mixture/coarse wollastonite layers reached a thickness of about 0.25 inch (6.4 mm), the wax coated trough-shaped preform was dried at about room temperature for about 24 hours. The about 0.25 inch (6.4 mm) thick coating nominally comprised about 12 slurry mixture/coarse wollastonite layers. After the wax coated trough-shaped preform had substantially completely dried at room temperature, it was placed into an air atmosphere furnace, which was maintained under an exhaust hood, and the furnace and its contents were heated to about 120°C and held at that temperature for about 6 hours, during which time the wax melted leaving behind an unfired precursor to the shell 102. The furnace and its contents were then heated to about 950°C in about 2 hours and held at about 950° for about 4 hours to substantially completely remove any residual wax and ensure the sintering of the colloidal alumina and wollastonite, thereby forming the shell 102. The furnace and its contents were then cooled to about room temperature.

About 40 grams of VASELINE® petroleum jelly vehicle (Cheseborough Ponds, Inc., Greenwich, CT) were placed into a small aluminum weighing dish and heated on a hot plate set at medium heat until the jelly turned into a liquid. A clean sable brush was then used to substantially completely coat the inner surface 121 of the trough-shaped preform 102 to provide an interface for the application of a nickel oxide powder mixture 103. Specifically, a mixture 103 comprising about 8 grams of -325 mesh (particle diameter less than about 45 $\mu$m) nickel oxide powder and about 16 grams of ethanol was applied with a sponge brush to substantially completely cover the petroleum jelly coated surface to form a growth lay-up. The growth lay-up comprising the wollastonite shell 102 containing the trough-shaped preform 100 was placed into a refractory container 104 such that opposite longitudinal ends of the wollastonite shell 102 on the outer surface of the preform 100 were supported by two partially hollowed-out fire bricks 105 (i.e., cavities were created in each of the two fire bricks so as to be complementary to each longitudinal end of the wollastonite shell 102) all of which were surrounded by a wollastonite bedding 106.

The refractory boat and its contents were then placed into a resistance heated air atmosphere furnace and heated from about room temperature to about 700°C. Simultaneously about 800 grams of a parent metal was melted, the parent metal comprising by weight about 7.5 to 8.5 percent silicon, 3.0 to 4.0 percent copper, 2.7 to 3.5 percent zinc, 0.2 to 0.3 percent magnesium, < 0.01 percent calcium, < 0.10 titanium, 0.7 to 1.0 percent iron, < 0.5 percent nickel, < 0.5 percent manganese, < 0.35 percent tin, < 0.001 percent beryllium, < 0.15 percent lead, and the balance aluminum. At about 700°C, the molten parent metal 107 was poured into the cavity of the trough-shaped preform 100 to substantially completely fill the cavity, as shown in Figure 7b. Then, wollastonite powder 108 was poured onto surface of the molten parent metal 107 and the furnace door was closed. Figure 7b is a cross-sectional schematic of the setup as contained in the furnace. The furnace and its contents were then heated from about 700°C to about 1000°C at about 700°C per hour. After about 96 hours at about 1000°C, the furnace and its contents were cooled from about 1000°C to about 700°C at about 400°C per hour. At about 700°C, the furnace door was opened and the refractory boat 104 and its contents were removed. The wollastonite coated trough-shaped composite corresponding to the preform 100 within the refractory boat 104 was then removed and residual parent metal 107 was decanted. The wollastonite shell 102 was then separated from the growth infiltrated trough-shaped composite corresponding to the preform 100 and the composite was buried underneath silica sand to cool the composite to about room temperature. At about room temperature, the trough-shaped preform 100 was removed from the sand and it was observed that oxidation reaction product had grown into and embedded the NICALON™ silicon carbide plain weave fiber preform to form a ceramic composite body 110 comprising silicon carbide fiber reinforcement embedded by alumina oxidation reaction product. The surface of ceramic composite body was then cleaned in a sandblaster.

Once the ceramic composite body had been successfully manufactured, the metal removal was begun. Specifically, as shown in Figure 7c, a filler material mixture 111 comprised by weight of about 10 percent -325 mesh (particle diameter less than about 45 $\mu$m) magnesium powder (Reade Manufacturing Co., Lakehurst, NJ) and about 90 percent E67 1000 grit (average particle diameter of about 5 $\mu$m) alumina (Norton Co., Worcester, MA) were combined in a plastic jar with alumina milling balls and the plastic jar and its contents were placed on a rotating jar mill to substantially completely mix the filler material mixture. After the filler material mixture 111 had been separated from the milling balls, the bottom of a graphite foil lined stainless steel boat 112 was filled with the filler material mixture. The ceramic composite body 110 was then placed onto the filler material mixture 111 and additional filler material mixture was poured over the ceramic composite body 110 to substantially completely cover it. The graphite foil lined stainless steel boat

25

112 and its contents, were then placed into a controlled atmosphere resistance heated tube furnace and the tube furnace was sealed. After the tube furnace and its contents were evacuated to about 30 inches (762 mm) of mercury vacuum, nitrogen was introduced into the furnace chamber. The tube furnace was once again evacuated and filled with nitrogen to establish a nitrogen flow rate of about 3 liters per minute. The tube furnace and its contents were heated from about room temperature to about 750°C at about 200°C per hour while maintaining a nitrogen flow rate of about 3 liters per minute. After about 5 hours at about 750°C with a nitrogen flow rate of about 3 liters per minute, the tube furnace and its contents were cooled to about room temperature at about 200°C per hour. At about room temperature, the nitrogen flow rate was interrupted, the tube furnace was opened, and the graphite foil lined stainless steel boat 112 and its contents were removed. After disassembling the graphite foil lined stainless steel boat and its contents, it was revealed that the metallic constituent of the silicon carbide fiber reinforced alumina composite body 110 had been substantially completely removed.

Example 8

A ceramic matrix composite body substantially the same as that of Example 1 and measuring about 2 inches (51 mm) long, about 2 inches (51 mm) wide and about 0.5 inch (13 mm) thick was subjected to the metal removal process substantially the same as that described in Example 1 except that the filler material mixture comprised by weight about 90 percent Grade LC-12 SX, extra fine, extra high purity silicon nitride having a particle size < 0.5 microns (obtained from Hermann C. Stark Co., New York, NY), the nitrogen gas was introduced into the furnace chamber at a flow rate of about 1 liter per minute and the furnace was heated to about 750°C for about 5 hours. At about room temperature, the set-up was disassembled to reveal that the metallic constituent comprising an aluminum alloy in the silicon carbide particulate reinforced alumina composite had been drawn out of the composite body during the process.

Thus, this Example demonstrates that the metallic constituent of a composite body can be drawn out by processing a ceramic composite body in a filler material comprising a relatively inert component (under the process condition for removal of metal) consisting of silicon nitride and an infiltration enhancer precursor consisting of magnesium.

Example 9

The following Example demonstrates, among other things, the use of the method of the present invention to remove at least a portion or substantially all of at least one metallic component of a metallic constituent from a ceramic reinforced metal composite body (i.e.; a metal matrix composite). Specifically, the following Example demonstrates the removal of at least one metallic component of a matrix metal from a silicon carbide reinforced aluminum metal matrix composite body. Furthermore, the following Example demonstrates a method for the formation of a metal matrix composite and the subsequent removal of at least one metallic component of the matrix metal from a plurality of metal matrix composites.

This Example specifically demonstrates the following aspects concerning the removal of at least one metallic component of the metallic constituent from a metal matrix composite body: the formation of a metal matrix composite body including fabrication of a mold which is used to make a preform, preform fabrication, metal matrix composite formation, and the removal of at least one metallic component of the metallic constituent of the formed metal matrix composite body.

Mold Fabrication

A rubber mold was fabricated, said mold measuring about 8 inches (203 mm) square by about 2 inches (51 mm) high and having centered on one surface a recess measuring about 6 inches (152 mm) round by about 0.075 inch (1.9 mm) deep. Specifically, a mold form for casting the rubber mold was constructed by affixing a glass disk measuring about 5.9 inches (150 mm) round and about 0.075 inch (1.9 mm) thick to the FORMICA® facing of a particle board, said board and facing measuring about 8 inches (203 mm) square and about 0.75 (19 mm) thick. The glass disk was affixed to the FORMICA® facing of the particle board by coating one surface of the glass disk with a thin layer of VASELINE® petroleum jelly (Chesebrough-Ponds, Inc., Greenwich, CT). The mold form was completed by placing two small-side boards (also comprising FORMICA®-faced particle board) measuring about 8 inches (203 mm) long, about 4 inches (102 mm) wide and about 0.75 inch (19 mm) thick on opposite sides of and perpendicular to the bottom board and two large-side boards (also comprising FORMICA®-faced particle board) measuring about 10 inches (254 mm) long, about 4 inches (102 mm) wide and about 0.75 inch (19 mm) thick perpendicular to the bottom board and two small-side boards. Carpenter clamps secured the small-side boards and large-side board to each other and to the bottom board to form the mold form having inner dimensions measuring about 8 inches (203 mm) square and about 3.25 inches (83 mm) high. Thus, the inner surface of the mold form comprised FORMICA®. An MS-122/CO2 TFE Release Agent Dry Lubricant (Miller-Stephenson, Inc., Danbury, CT) was then sprayed evenly onto the exposed surfaces of the glass disk affixed to the bottom board of the mold form and the FORMICA® faces of the inner walls of the mold form.

A rubber casting mixture was formed by combining in a five-gallon plastic container about 220 grams of dark blue Zn catalyst activator (Silicones, Inc., Woodbine High Point, NC) with about 2400 grams of white silicone rubber base (Silicones, Inc., Woodbine High Point, NC). The ingredients were then mixed using a spatula to form a uniform light blue liquid rubber casting mixture. The five-gallon container and its contents were then placed in a vacuum chamber for about 5 minutes while maintaining a vacuum that permitted any entrained air in the casting mixture to ebulate from the casting mixture in a controlled manner, thereby removing any entrained air from the uniformly colored rubber casting mixture.

After the rubber casting mixture had been sufficiently de-aired, the mold form was placed onto a level surface and the rubber casting mixture was poured into the mold form. After about 24 hours, during which time the rubber casting mixture cured to form a rubber mold; the mold form was disassembled and a rubber mold having the characteristics described above was obtained. The rubber mold was then cleaned using a commercially available hand dishwashing liquid (i.e., SUNLIGHT® hand dishwashing liquid, Lever Brother Co., New York, NY), warm water and a soft cloth.

Preform Fabrication

A silicon carbide mixture was prepared in a 16 ounce NALGENE® plastic jar (obtained from VWR Scientific, Bridgeport, NJ). About 123 grams of dionized water and about 1.2 grams of RHOPLEX® LC-40 high solids acrylic emulsion (Rohm and Haas Company, Philadelphia, PA) were combined in the plastic jar and the plastic jar was closed. The plastic jar and its contents were hand shaken for about 2 minutes to mix the ingredients. The plastic jar was then opened aid about 0.1 gram of 581B defoamer (Colloid, Newark, NJ) was added to the contents of the plastic jar. After the plastic jar and its contents had been shaken for about 2 minutes, about 61.2 grams of BLUONIC® A colloidal alumina (Westbond Corp., Wilmington, DE) were added to the contents of the plastic jar. After the plastic jar was closed, the plastic jar and its contents were hand shaken for about 2 minutes to mix the contents. About 185 grams of Type E-110 500 grit (average particle diameter of about 17 microns) silicon carbide (Norton Co., Worcester, MA) were added to the contents of the plastic jar and the plastic jar and its contents were hand shaken for about 2 minutes. About 430 grams of 39 CRYSTOLON® 220 grit (average particle diameter of about 66 microns) silicon carbide (Norton Co., Worcester, MA) were added to the contents of the plastic jar and the jar was closed. The plastic jar and its contents were then placed on a roll mill set at a rotational speed of about 35 revolutions per minute for about 8 hours.

An aluminum plate measuring about 9 inches (229 mm) square and about 0.25 inch (6.4 mm) thick was placed on the table of a Model VP51D1 SYNTRON® magnetic vibrator (FMC Corp., Materials Handing Equipment Division, Homer City, PA) having a Model CSCR-1B SYNTRON® electric controller. The cleaned rubber mold was then placed onto the aluminum plate so that the recess of the rubber mold faced away from the aluminum plate.

Meanwhile, the plastic jar containing the silicon carbide mixture was placed on a Model OMI-b orbital mixer (Engineered Technical Products, Somerville, NJ) for about 30 minutes at a mixing speed of about 24 revolutions per minute. The plastic jar containing the silicon carbide mixture was removed from the orbital mixer and hand shaken while the electric controller of the magnetic vibrator supporting the aluminum plate and rubber mold was turned on to a vibration setting of about 5. About 105 grams of the silicon carbide mixture were poured from the plastic jar and into the recess of the rubber mold as the rubber mold was vibrated by the supporting magnetic vibrator. After about one minute, with the electrical controller of the magnetic vibrator set at a setting of about 5, the silicon carbide mixture flowed into and filled the recess in the rubber mold. After the entire recess of the rubber mold was covered with the silicon carbide mixture, the setting of the electrical controller of the magnetic vibrator was reduced to a setting of about 3 and held at a setting of about 3 for about 10 minutes. The electrical controller of the magnetic vibrator was then turned off. Excess silicon carbide mixture extending beyond the surface of the rubber mold was removed by twice drawing the 45 degree beveled edge of a doctor blade measuring about 9 inches (229 mm) long, about 2.98 inches (76 mm) high and about 0.039 inches (0.99 mm) thick across the surface of the recess in the mold by using the sides of the rubber mold as a guide. The aluminum plate supporting the rubber mold and its contents were then rotated clockwise by about 90 degrees. The doctor blade was again drawn twice across the surface of the mold recess containing the silicon carbide mixture. This procedure was repeated until the aluminum plate supporting the rubber mold had been rotated a total of about 360 degrees to about its original position on the table and the surface level of the silicon carbide mixture contained within the recess of the rubber mold substantially coincided with the surface level of the rubber mold.

The aluminum plate supporting the rubber mold and the rubber mold and its contents were then removed from the vibrating table and placed under a 250 watt, 130 volt infrared light (Catalog No. 3349K51, McMaster Corr., Elmhurst, IL) for about 30 minutes. The distance between the infrared light and the silicon carbide mixture within the recess of the rubber mold was about 12 inches (305 mm). The aluminum plate supporting the rubber mold and the rubber mold and its contents were then placed into a forced air oven set at about 45°C for about 3 hours to permit the moisture to evaporate from the silicon carbide mixture to form a preform. After the preform formed in the rubber mold, the aluminum plate supporting the rubber mold and the rubber mold and its contents were removed from the drying oven and the sides of the rubber mold were manipulated to loosen the preform from within the rubber mold. The rubber mold was then inverted over a cordierite plate measuring about 7 inches (178 mm) square and about 0.5 inch (13 mm) thick. The sides of the rubber mold were again manipulated while the rubber mold was held about 1 inch (25 mm) from the cordierite plate to dislodge completely the silicon carbide preform from the rubber mold. The weight of the resultant silicon carbide preform measured about 80 grams while the preform dimensions measured about 6 inches (156 mm) round by about 0.078 inch (2 mm) thick.

The cordierite plate supporting the silicon carbide preform was then placed into a resistance heated air atmosphere furnace. The furnace and its contents were then heated from about room temperature to about 100°C in about 1 hour, held at about 100°C for about 1 hour, heated from about 100°C to about 1100°C at about 125°C per hour. After about 2 hours at about 1100°C, the power to the resistance heated air furnace was disengaged and the furnace and its contents were allowed to cool to about room temperature as fast as the furnace would permit. At about room temperature, the mass of the fired silicon carbide preform measured about 79 grams while the fired silicon carbide preform dimensions measured about 6 inches (156 mm) round by about 0.078 inch (20 mm) thick.

A first surface of the fired silicon carbide preform was then spray-coated with KRYLON® crystal clear acrylic spray (Borden Krylon Inc., Columbus, OH). The KRYLON® crystal clear acrylic coating was dried by placing the fired silicon carbide preform in a forced air oven for about 5 minutes at about 120°C. After the fired preform had cooled to about room temperature, a graphite-based mixture comprised by weight of about 50% DAG® 154 colloidal graphite (Acheson Colloids Co., Port Huron, MI) and about 50% denatured ethanol (Pharmco, Bayonne, NJ) was sprayed using an air brush onto the acrylic coating on the surface of the fired silicon carbide preform. The fired silicon carbide preform was again placed in a forced air oven set at about 120°C for about 5 minutes to dry the graphite-based mixture. At about room temperature, the first surface of the fired preform was substantially evenly coated with additional graphite-based mixture to result in a total density of at least 0.022 grams per square inch ($3.4 \times 10^{-5}$ grams per square millimeter). After the colloidal graphite coating had substantially completely dried on the first surface of the fired silicon carbide preform, the fired silicon carbide preform was turned over so that a second surface of the fired silicon carbide preform was exposed. The second surface of the fired silicon carbide preform was then also spray-coated with the KRYLON® crystal clear acrylic spray and placed into a forced air oven set at about 120°C for about 5 minutes. The fired silicon carbide preform was then allowed to cool to about room temperature and the KRYLON® crystal clear acrylic coated second surface was sprayed using an air brush with the graphite based mixture. The fired silicon carbide preform was again placed into the forced air oven at about 120°C for about 5 minutes to dry the graphite based mixture to at least a density of 0.011 grams per square inch ($1.7 \times 10^{-5}$ grams per square millimeter) on the second surface of the fired silicon carbide preform.

Composite Formation

A setup including the graphite-coated fired silicon carbide preform was prepared. A boat was machined from Grade ATJ graphite (Union Carbide Corporation, Carbon Products Division, Cleveland, OH) to internal dimensions measuring about 9 inches (228 mm) square, about 4 inches (102 mm) high and having a wall thickness of about 0.5 inch (13 mm). The graphite boat was lined with a graphite foil box measuring about 7 inches (178 mm) square and about 2 inches (51 mm) high. The graphite foil box was fabricated from a piece of GRAFOIL® graphite foil (Union Carbide Corp., Carbon Products Division, Cleveland, OH) measuring about 11 inches (219 mm) square and about 0.015 inch (0.38 mm) thick. A matrix metal comprising by weight about 15% silicon, 5% magnesium and the balance aluminum, and measuring about 7 inches (178 mm) square and about 0.5 inch (13 mm) thick, was placed within the graphite foil box contained in the graphite boat. The exposed surface of the matrix metal ingot was then spray-coated with KRYLON® crystal clear acrylic and a graphite foil ring having an outer diameter measuring about 6.125 inches (156 mm), an inner diameter measuring about 5.85 inches (149 mm) and a thickness of about 0.005 inch (0.13 mm) was substantially centered on the exposed surface of the matrix metal ingot. After the graphite foil ring had been placed on this exposed surface of the matrix metal ingot, both the graphite foil ring and the exposed surface of the matrix metal ingot were spray-coated with KRYLON® crystal clear acrylic spray. About 1.5 grams of -50 mesh (particle diameter less than about 297 microns) atomized magnesium powder (Hart Metals Inc., Tamaqua, PA) were sprinkled onto the exposed surface of the matrix metal ingot within the graphite foil ring. The graphite boat containing the graphite foil box, the matrix metal ingot and the graphite foil ring was then placed into a forced air atmosphere oven set at about 80°C for about 1 hour. The graphite coated fired silicon carbide preform was then placed onto the graphite foil ring so that the second surface of the fired preform faced and contacted the exposed surface of the matrix metal ingot. The space between the graphite foil box and the graphite boat was then filled with 39 CRYSTOLON® 90 grit (average particle diameter of about 216 microns) silicon carbide (Norton Co., Worcester, MA) to form a setup.

The setup was then incorporated into a layup. The opening of the graphite boat of the setup was covered with a piece of GRAFOIL® graphite foil (Union Carbide Corp., Carbon Products Division, Cleveland, OH) and then placed into a graphite tray having internal dimensions measuring about 19 inches (483 mm) long, about 10 inches (254 mm) wide, about 1.5 inches (38 mm) deep and having a wall thickness of about 0.5 inch (13 mm).

The layup and its contents were then placed into a retort-lined resistance heated furnace capable of maintaining a controlled atmosphere. Prior to placing the layup into the retort-lined resistance heated furnace, the internal surfaces of the retort-lined furnace were wiped clean using paper towels soaked with dehydrated alcohol. The furnace door was closed and the furnace and its contents were evacuated to about 30 inches (762 mm) of mercury vacuum. The vacuum pump was then disengaged and nitrogen gas was introduced into the furnace chamber until atmospheric pressure was substantially achieved. The nitrogen gas flow rate was then interrupted and simultaneously the vacuum pump was reengaged. The retort-lined resistance heated furnace and its contents were then evacuated again to about 30 inches (762 mm) of mercury vacuum. Again, the vacuum pump was disengaged from the retort-lined resistance heated furnace and nitrogen gas was introduced into the furnace chamber at a flow rate of about 5 liters per minute and at about atmospheric pressure. While maintaining the nitrogen gas flow rate at about 5 liters per minute, the furnace and its contents were heated from about room temperature to about 225°C in about one hour. After about 5 hours at about 225°C, the furnace and its contents were heated from about 225°C to about 850°C in about 3 hours. After about 7 hours at about 850°C, while maintaining a nitrogen gas flow rate of about 5 liters per minute, the power to the retort-lined resistance heated furnace was interrupted and the nitrogen gas flow was stopped. The furnace door was opened and the layup and its contents were removed from the furnace and allowed to cool to about room temperature. At about room temperature, the layup was disassembled to reveal that the fired silicon carbide preform had been infiltrated by the matrix metal to form a metal matrix composite disk.

Metal Removal

To prepare for the removal of the metallic component from the metal matrix composite disk, a filler mixture was prepared comprising by weight about 90% Grade LC-12 SX, extra fine, extra high purity silicon nitride having a particle size less than about 5 microns (Hermann C. Stark Co., New York, NY) and about 10% -325 mesh (average particle diameter of about 45 microns) ground magnesium powder (Reade Manufacturing Co., Lakehurst, NJ). About 2000 grams of the ingredients in the above designated proportions were placed into a 1 gallon stainless steel jar. The stainless steel jar was closed and placed onto a rolling mill for about an hour to substantially completely mix the silicon nitride powder and the ground magnesium powder thereby forming the filler mixture.

The inner cavity of a stainless steel box, measuring about 10 inches (254 mm) square and about 2 inches (51 mm) high, was lined with a piece of GRAFOIL® graphite foil (Union Carbide Corp., Carbon Products Division, Cleveland, OH). A sufficient amount of filler mixture was poured into the graphite foil lined stainless steel box so as to substantially completely cover the bottom surface of the box. After leveling, the filler mixture was handpacked into the graphite foil lined stainless steel box by pressing the filler mixture with the palm and/or fist and/or fingers of a hand. The metal matrix composite disk was then placed on the handpacked filler mixture and additional filler mixture was poured into the graphite foil lined box so as to substantially completely cover the metal matrix composite disk. The total amount of filler mixture weighed about 538 grams. After leveling, the filler mixture covering the metal matrix composite disk was lightly packed over the metal matrix composite disk thereby forming a layup.

The layup and its contents were then placed into a retort-lined resistance heated furnace and the furnace door was closed. The furnace and its contents were evacuated to about 30 inches (762 mm) of mercury vacuum. The vacuum pump was disengaged and nitrogen gas was introduced at a flow rate of about 10 liters per minute until atmospheric pressure was attained in the retort chamber. After interrupting the nitrogen gas flow rate, the vacuum pump was again engaged to the chamber of the retort-lined resistance heated furnace. The furnace and its contents were then evacuated to about 30 inches (762 mm) of mercury. Again, the vacuum pump was disengaged and nitrogen gas was introduced into the chamber of the retort-lined resistance heated furnace to establish about atmospheric pressure in the retort chamber. The furnace and its contents were then heated from about room temperature to about 750°C in about 4 hours, held at about 750°C for about 5 hours, at which time the energy to the furnace was interrupted and the furnace and its contents were allowed to cool to about room temperature while maintaining a nitrogen gas flow rate of about 10 liters per minute. After the furnace and its contents had cooled to about room temperature in about 5 hours, the nitrogen gas flow was interrupted, the furnace door opened and the layup was removed. The layup was disassembled to reveal that the metallic component of the metal matrix composite disk had been removed thereby forming a metal-removed metal matrix composite body.

A portion of the metal-removed metal matrix composite body was then cut, mounted and polished for metallographic examination. Simultaneously, a comparative metal matrix composite disk made in a manner substantially the same as metal-removed metal matrix composite disk but not having been exposed to the metal removal step, was cut, mounted and polished for comparison with the metal-removed metal matrix composite body.

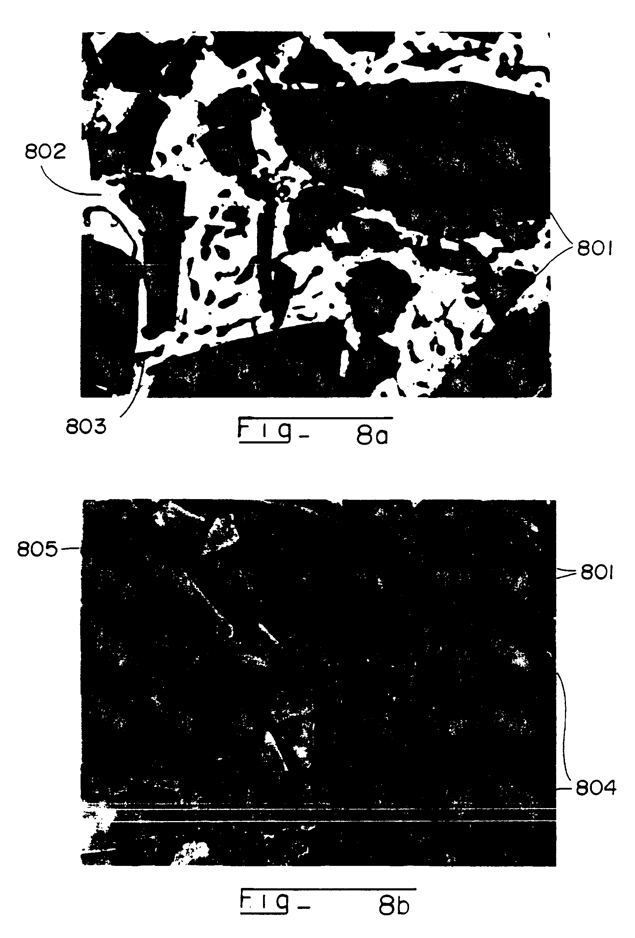

Figure 8a shows a photomicrograph of the comparative metal matrix composite body at a magnification of about 1000X. Specifically, Figure 8a shows a silicon carbide reinforcement material 801 surrounded by a metallic constituent 802 comprised of an aluminum metallic component and a silicon rich metallic component 803.

Figure 8b and Figure 8c show photomicrographs of the metal-removed metal matrix composite body at a magnification of about 1000X and 200X, respectively. Specifically, Figure 8b and Figure 8c show a silicon carbide reinforcement material 801 surrounded by a matrix conversion layer 804 (which is discussed in greater detail below) and porosity 805. A comparison of Figures 8a and 8b shows distinct differences between the comparative metal matrix composite body and the metal-removed metal matrix composite body.

To understand better the composition of the matrix conversion layer 804 of the metal-removed composite disk, x-ray diffraction analysis, energy dispersive x-ray analysis and wavelength dispersive analysis of the metal-removed metal matrix composite body were performed. Specifically, a portion of the metal-removed metal matrix disk was prepared for x-ray diffraction analysis by grinding the outer surfaces of the metal-removed metal matrix composite disk using an abrasive diamond disk. The metal-removed composite disk was then ground to form a powder sample for x-ray diffraction analysis. The diffraction analysis was run overnight using a Sieman's Model D500 x-ray diffractometer having a Cu Kα x-ray source tube. The results of the x-ray diffraction analysis indicated that among other phases, the metal-removed metal matrix composite body was comprised of silicon carbide, aluminum nitride and silicon. To correlate the structural features shown in Figure 8b with the x-ray diffraction results, energy dispersive x-ray analysis of the metal-removed metal matrix composite body was performed in a Model JSM-840 scanning electron microscope (Jeol, Japan). Specifically, spot probes of the matrix conversion layer 804 were performed using a TN-5500 energy dispersive x-ray analyzer (Tracor Northern) while maintaining the electron microscope beam potential of about 10 kilovolts and a beam current of about 1.5 nA. The results of the energy dispersive x-ray analysis indicated that the matrix conversion layer 804 included aluminum. Additionally, wavelength dispersive x-ray analysis was performed using a Model MC54 multielement spectrometer (Peak Instruments Co.) with an excitation potential of about 10 kilovolts, a beam current set at 250 nA and a dwell time of about 3 seconds. This additional x-ray analysis showed that the matrix layer 804 also included nitrogen. A correlation of the microstructural features, the results of the x-ray diffraction analysis, the results of wavelength dispersive analysis and the results of the energy dispersive analysis, suggests that the matrix conversion layer 804 comprises an aluminum nitride-based material.

To characterize further the metal-removed metal matrix composite body, intrusion porosimetry was performed on a portion of the sample using a Model autoscan 33 mercury porosimeter (Quantachrome, Syosset, NY). The results of the porosimetry analysis are summarized in Table IV below.

Thus, this Example demonstrates that the method of the present invention may be used to remove at least a portion of at least one metallic component from a metal matrix composite body to form a metal-removed metal matrix composite body.

EP 0 566 688 B1

TABLE IV

EQUIPMENT AND METAL-REMOVED SAMPLE PROPERTIES

Instrument..............Autoscan 33
1X  OX - X33000 PSIG (0-2.32 X $10^3$ kg/$cm^2$)

Cell Stem Volume........0.5 $cm^3$
Total Intruded Volume...0.0621 $cm^3$/g
Bulk Density............2.6371 g/$cm^3$
Mercury Contact Angle...140.00 X
Sample Weight...........1.5998 g
Minimum Delta Volume....0.500 % full scale
Hg volume normalized by sample weight

Total Pore Surface Area.......0.92 $m^2$/g
Apparent Density..............3.1539 g/$cm^3$
Mercury Surface Tension.......480.0 erg/$cm^2$
Bulk Sample Volume............0.6066 $cm^3$
Moving Point Average..........1

INTRUSION STATISTICS

24 PSIA    TO    32891 PSIA
(1.69 kg/$cm^2$ TO 2.31 X $10^3$ kg/$cm^2$)

8.88842 micrometers    TO    0.00649 micrometers

| | MEAN | MODE | MEDIAN |
|---|---|---|---|
| VOLUME | $5.21 \times 10^{-2}$ $cm^3$/g at a diameter of $2.70 \times 10^{-1}$ micrometers | $1.65 \times 10^{-1}$ $cm^3$/($\mu m$-g) at a diameter of $1.22 \times 10^{-2}$ micrometers | $3.11 \times 10^{-2}$ $cm^3$/g at a diameter of 1.68 micrometers |
| SURFACE AREA | $1.49 \times 10^{-1}$ $m^2$/g at a diameter of $2.70 \times 10^{-1}$ micrometers | $4.50 \times 10^{1}$ $m^2$/($\mu m$-g) at a diameter of $1.22 \times 10^{-2}$ micrometers | $4.60 \times 10^{-1}$ $m^2$/g at a diameter of $3.18 \times 10^{-2}$ micrometers |
| PORE NUMBER FRACTION | $1.31 \times 10^{-3}$ at a diameter of $2.70 \times 10^{-1}$ micrometers | $6.06 \times 10^{-1}$ at a diameter of $1.22 \times 10^{-2}$ micrometers | 1 at a diameter of $1.22 \times 10^{-2}$ micrometers |

**Claims**

1. A method for removing at least one metallic component of a metallic constituent contained within a multi-phase composite body comprising:

   contacting at least a portion of at least one surface of said multi-phase composite body with a permeable mass comprising at least one material selected from the group consisting of a filler material and a preform; and

   spontaneously infiltrating at least a portion of the permeable mass with at least one metallic component of a metallic constituent of the composite body, thereby reducing the amount of said at least one metallic component in the composite body.

2. A method for removing at least metallic component of a metallic constituent contained within a multi-phase composite body comprising:

   placing a composite body comprising at least two phases, one of said phases comprising a metallic component, into a contact with a permeable mass, said permeable mass comprising at least one material selected from the group consisting of a filler material and a preform, said permeable mass contacting at least a portion of at least one surface of the composite body;

   communicating at least one of an infiltration enhancer and an infiltration enhancer precursor with at least one of the metallic component of the composite body, said permeable mass, said at least a portion of at least one surface and an infiltrating atmosphere, to cause spontaneous infiltration of the metallic component into the permeable mass to occur; and

   spontaneously infiltrating at least a portion of the permeable mass with molten metallic component.

31

3. The method of any one of claims 1 or 2, wherein said permeable mass substantially completely surrounds said composite body or wherein said permeable mass contacts substantially only one side of said composite body.

4. The method of any one of claims 1 or 2, wherein said filler material comprises at least one ceramic particulate.

5. The method of any one of claims 1-3, wherein the metallic component of the composite body is selectively removed from only that portion of the composite body which contacts said permeable mass.

6. The method of any one of claims 1-5, wherein said infiltrating atmosphere communicates with said permeable mass for substantially all of said spontaneously infiltrating step.

7. The method of any one of claims 1-6, wherein infiltration enhancer is supplied to at least said metallic component in said multiphase composite body and said permeable mass.

8. The method of any one of claims 2-7, wherein said metallic component comprises aluminum, said infiltration enhancer precursor comprises magnesium and said infiltrating atmosphere comprises nitrogen.

9. The method of any one of claims 2-8, wherein said infiltration enhancer is formed by reacting said infiltration enhancer precursor and at least one species selected from the group consisting of the infiltrating atmosphere and a material added to the permeable mass.

10. The method of claim 9, wherein an infiltration enhancer comprising a nitride of magnesium is formed from a reaction between a nitrogenous infiltrating atmosphere and a magnesium-containing infiltration enhancer precursor.

11. The method of any one of claims 1-10, wherein said permeable mass is contacted with a barrier means, and said spontaneously infiltrating occurs only up to said barrier means.

12. The method of any one of claims 1-11, wherein said spontaneously infiltrating results in a gradation of properties in the formed body after at least a portion of said metallic component is removed therefrom.

13. The method of claim 12, wherein said gradation of properties occurs due to at least one step selected from the group of steps consisting of (1) discontinuing spontaneous infiltration prior to complete removal of said metallic component; (2) adjusting the temperature to different set points during said spontaneous infiltration; (3) providing differing amounts of infiltration enhancer and/or infiltration enhancer precursor in at least one of said permeable mass and said metallic constituent; (4) causing said permeable mass which contacts said composite body to exhibit different properties at different portions thereof; and (5) controlling infiltration of said permeable mass with metallic component from said multiphase composite body so as to result in differing amounts of infiltration in certain areas of the permeable mass relative to other areas of the permeable mass.

14. The method of any one of claims 1-13, wherein during and/or after said spontaneously infiltrating, at least one matrix conversion layer is formed in at least a portion of said multi-phase composite body.

15. The method of claim 14, wherein: (1) said matrix conversion layer is formed on at least a portion of a reinforcement phase in said multi-phase composite body; or (2) said matrix conversion layer comprises a reaction product formed from a reaction between at least a portion of said metallic component and at least one other species; or (3) as dependent on claim 2, wherein said matrix conversion layer is formed from a reaction between said infiltrating atmosphere and said at least a portion of said metallic component.

16. The method of claim 2, wherein said at least one metallic component comprises aluminum, said infiltration enhancer precursor comprises magnesium present in an amount of at least 0.1 percent by weight and said infiltrating atmosphere comprises nitrogen.

**17.** The method of claim 16, wherein said spontaneously infiltrating occurs at a temperature of at least about 675°C, and preferably from about 675°C to about 1000°C, and wherein said matrix conversion layer comprises aluminum nitride.

**18.** The method of claim 11, wherein said barrier means is placed into contact with said permeable mass by at least one process selected from the group consisting of painting, dipping, silk screening, evaporating, sputtering, depositing and contacting a solid material or sheet with said permeable mass.

**19.** The method of any of the preceding claims, wherein said multiphase composite body comprises at least one body selected from the group consisting of a ceramic matrix composite body and a metal matrix composite body and wherein said multi phase composite body is reinforced by at least one material selected from the group of materials consisting of powders, flakes, platelets, microspheres, whiskers, bubbles, fibers, particulates, fiber mats, chopped fibers, spheres, pellets, tubules and refractory cloths.

**20.** The method of claim 19, wherein a matrix conversion layer is present in at least a portion of said reinforcement.

**21.** The method of any of the preceding claims, wherein said multiple-phase composite body comprises a ceramic matrix composite body comprising at least one reinforcement filler comprising at least one ceramic filler having a plurality of superimposed coatings thereon.

**22.** The method of claim 21, wherein said at least one ceramic filler having a plurality of superimposed coatings thereon comprises at least one material system selected from the group consisting of silicon carbide fibers coated with boron nitride (BN)/silicon carbide (SiC); silicon carbide fibers coated with titanium carbide (TiC) /silicon nitride ($Si_3N_4$); silicon carbide fibers coated with carbon (C)/silicon carbide (SiC); carbon fibers coated with carbon (C)/silicon carbide (SiC); alumina fibers coated with iridium (Ir)/silicon carbide (SiC); alumina fibers coated with niobium (Nb)/silicon carbide (SiC); and alumina fibers coated with platinum (Pt)/silicon carbide (SiC).

**23.** The method of any of claims 1 to 20, wherein said multiple-phase composite body comprises a metal matrix composite body comprising at least one reinforcement filler comprising at least one ceramic-coated filler.

**24.** The method of claim 23, wherein said at least one ceramic-coated filler comprises at least one material system selected from carbon fibers coated with alumina and carbon fibers coated with silicon carbide.

**Patentansprüche**

**1.** Verfahren zur Entfernung wenigstens einer metallischen Komponente eines metallischen Bestandteils, der innerhalb eines mehrphasigen Verbundkörpers enthalten ist, das umfaßt:
Inkontaktbringen wenigstens eines Teils wenigstens einer Oberfläche des genannten mehrphasigen Verbundkörpers mit einer permeablen Masse, die wenigstens ein Material umfaßt, das aus der Gruppe ausgewählt ist, die aus einem Füllstoffmaterial und einer Vorform besteht; und
Spontaninfiltrieren wenigstens eines Teils der permeablen Masse mit wenigstens einer metallischen Komponente eines metallischen Bestandteils eines Verbundkörpers, wodurch die Menge der genannten wenigstens einen metallischen Komponente in dem Verbundkörper vermindert wird.

**2.** Verfahren zur Entfernung wenigstens einer metallischen Komponente eines metallischen Bestandteils, der in einem mehrphasigen Verbundkörper enthalten ist, das umfaßt:
Anordnen eines Verbundkörpers, der wenigstens zwei Phasen aufweist, wobei eine dieser Phasen eine metallische Komponente umfaßt, im Kontakt mit einer permeablen Masse, wobei die genannte permeable Masse wenigstens ein Material umfaßt, das aus der Gruppe ausgewählt ist, die aus einem Füllstoffmaterial und einer Vorform besteht, wobei die genannte permeable Masse mit wenigstens einem Teil wenigstens einer Oberfläche des Verbundkörpers in Kontakt ist;
Inverbindungbringen von wenigstens einem von einem Infiltrationsverstärker und einem Infiltrationsverstärkervorläufer mit wenigstens einem von der metallischen Komponente des Verbundkörpers, der genannten permeablen Masse, dem genannten wenigstens einen Bereich wenigstens einer Oberfläche und einer Infiltrationsatmosphäre, um zu bewirken, daß es zu einer spontanen Infiltration der metallischen Komponente in die permeable Masse kommt; und
Spontaninfiltrieren wenigstens eines Teils der permeablen Masse mit schmelzflüssiger metallischer Komponente.

3. Verfahren nach irgendeinem der Ansprüche 1 oder 2, bei dem die genannte permeable Masse im wesentlichen vollständig den genannten Verbundkörper umgibt, oder bei dem die genannte permeable Masse im wesentlichen nur eine Seite des genannten Verbundkörpers berührt.

4. Verfahren nach irgendeinem der Ansprüche 1 oder 2, bei dem das genannte Füllstoffmaterial wenigstens ein keramisches teilchenförmiges Material umfaßt.

5. Verfahren nach irgendeinem der Ansprüche 1 bis 3, bei dem die metallische Komponente des Verbundkörpers selektiv aus nur demjenigen Bereich des Verbundkörpers entfernt wird, der mit der genannten permeablen Masse in Kontakt ist.

6. Verfahren nach irgendeinem der Ansprüche 1 bis 5, bei dem die genannte Infiltratationsatmosphäre mit der genannten permeablen Masse für im wesentlichen den gesamten Schritt der spontanen Infiltration in Verbindung steht.

7. Verfahren nach irgendeinem der Ansprüche 1 bis 6, bei dem der Infiltrationsverstärker wenigstens einem von der genannten metallischen Komponente in dem genannten mehrphasigen Verbundkörper und der genannten permeablen Masse zugeführt wird.

8. Verfahren nach irgendeinem der Ansprüche 2 bis 7, bei dem die genannte metallische Komponente Aluminium umfaßt, der genannte Infiltrationsverstärkervorläufer Magnesium umfaßt und die genannte Infiltrationsatmosphäre Stickstoff umfaßt.

9. Verfahren nach irgendeinem der Ansprüche 2 bis 8, bei dem der genannte Infiltrationsverstärker dadurch gebildet wird, daß man den genannten Infiltrationsverstärkervorläufer mit wenigstens einer Spezies umsetzt, die aus der Gruppe ausgewählt ist, die aus der Infiltrationsatmosphäre und einem zu der permeablen Masse zugesetzten Material besteht.

10. Verfahren nach Anspruch 9, bei dem ein Infiltrationsverstärker, der ein Nitrid vom Magnesium umfaßt, in einer Reaktion zwischen einer stickstoffhaltigen Infiltrationsatmosphäre und einem magnesiumhaltigen Infiltrationsverstärkervorläufer gebildet wir.

11. Verfahren nach irgendeinem der Ansprüche 1 bis 10, bei dem die genannte permeable Masse mit einem Sperrschichtelement in Kontakt gebracht wird, und bei dem das genannte spontane Infiltrieren nur bis zu dem genannten Sperrschichtelement erfolgt.

12. Verfahren nach irgendeinem der Ansprüche 1 bis 11, bei dem die genannte spontane Infiltration zu einer Abstufung der Eigenschaften in dem gebildeten Körper führt, nachdem wenigstens ein Teil der genannten metallischen Komponente daraus entfernt wurde.

13. Verfahren nach Anspruch 12, bei dem die genannte Abstufung der Eigenschaften infolge wenigstens eines Schritts erfolgt, der aus der Gruppe von Schritten ausgewählt ist, die besteht aus (1) der Unterbrechung der spontanen Infiltration vor der vollständigen Entfernung der genannten metallischen Komponente; (2) der Einregelung der Temperatur auf unterschiedliche Einstellwerte während der genannten spontanen Infiltration; (3) der Bereitstellung unterschiedlicher Mengen von Infiltrationsverstärker und/oder Infiltrationsverstärkervorläufer in wenigstens einem von der genannten permeablen Masse und dem genannten metallischen Bestandteil; (4) Bewirken, daß die genannte permeable Masse, die mit dem genannten Verbundkörper in Kontakt steht, in unterschiedlichen Bereichen unterschiedliche Eigenschaften zeigt; und (5) Steuern der Infiltration der genannten permeablen Masse mit metallischer Komponente aus dem genannten mehrphasigen Verbundkörper, so daß es zu unterschiedlichen Mengen an Infiltration in bestimmten Bereichen der permeablen Masse relativ zu anderen Bereichen der permeablen Massen kommt.

**14.** Verfahren nach irgendeinem der Ansprüche 1 bis 13, bei dem während und/oder nach der genannten spontanen Infiltration wenigstens eine Matrix-Konversionsschicht in wenigstens einem Teil des genannten mehrphasigen Verbundkörpers gebildet wird.

**15.** Verfahren nach Anspruch 14, bei dem: (1) die genannte Matrix-Konversionsschicht auf wenigstens einem Teil einer Verstärkungsphase in dem genannten mehrphasigen Verbundkörper gebildet wird; oder (2) die genannte Matrix-Konversionsschicht ein Reaktionsprodukt umfaßt, das bei einer Reaktion zwischen wenigstens einem Teil der genannten metallischen Komponente und wenigstens einer anderen Spezies gebildet wird; oder (3) die genannte Matrix-Konversionsschicht bei einem Verfahren gemäß Anspruch 2 bei einer Reaktion zwischen der genannten Infiltrationsatmosphäre und dem genannten wenigstens einen Teil der genannten metallischen Komponente gebildet wird.

**16.** Verfahren nach Anspruch 2, bei dem die genannte wenigstens eine metallische Komponente Aluminium umfaßt, der genannte Infiltrationsverstärkervorläufer Magnesium umfaßt, das in einer Menge von wenigstens 0,1 Gew.-% vorhanden ist, und die genannte Infiltrationsatmosphäre Stickstoff umfaßt.

**17.** Verfahren nach Anspruch 16, bei dem das genannte spontane Infiltrieren bei einer Temperatur von wenigstens etwa 675°C erfolgt, und vorzugsweise von etwa 675°C bis etwa 1000°C, und wobei die genannte Matrix-Konversionsschicht Aluminiumnitrid umfaßt.

**18.** Verfahren nach Anspruch 11, bei dem das genannte Sperrschichtelement mit der genannten permeablen Masse nach wenigstens einem Verfahren in Kontakt gebracht wird, das aus der Gruppe ausgewählt ist, die aus Aufstreichen, Tauchen, Siebdrucken, Aufdampfen, Ionenzerstäubung, Abscheidung und dem Inkontaktbringen eines festen Materials oder Blattes mit der genannten permeablen Masse besteht.

**19.** Verfahren nach irgendeinem der vorausgehenden Ansprüche, bei dem der genannte mehrphasige Verbundkörper wenigstens einen Körper umfaßt, der aus der Gruppe ausgewählt ist, die aus einem Keramikmatrix-Verbundkörper und einem Metallmatrix-Verbundkörper besteht, und bei dem der genannte mehrphasige Verbundkörper von wenigstens einem Material verstärkt ist, das aus der Gruppe von Materialien ausgewählt ist, die aus Pulvern, Flocken, Blättchen, Microspheres, Whiskers, Hohlkügelchen, Fasern, teilchenförmigen Stoffen, Fasermatten, gehackten Fasern, sphärischen Teilchen, Pellets, Röhrchen und Feuerfestgeweben besteht.

**20.** Verfahren nach Anspruch 19, bei dem eine Matrix-Konversionsschicht in wenigstens einem Teil der genannten Verstärkung vorhanden ist.

**21.** Verfahren nach irgendeinem der vorausgehenden Ansprüche, bei dem der genannte mehrphasige Verbundkörper einen Keramikmatrix-Verbundkörper umfaßt, der wenigstens einen Verstärkungsfüllstoff aufweist, der wenigstens einen Keramikfüllstoff umfaßt, der eine Vielzahl von übereinander angeordneten Beschichtungen aufweist.

**22.** Verfahren nach Anspruch 21, bei dem der genannte wenigstens eine Keramikfüllstoff mit einer Vielzahl von übereinanderliegenden Beschichtungen darauf wenigstens ein Materialsystem umfaßt, das aus der Gruppe ausgewählt, die aus mit Bornitrid (BN)/Siliciumcarbid (SiC) beschichteten Siliciumcarbidfasern; mit Titancarbid (TiC)/Siliciumnitrid ($Si_3N_4$) beschichteten Siliciumcarbidfasern; mit Kohlenstoff (C)-/Siliciumcarbid (SiC) beschichteten Siliciumcarbidfasern; mit Kohlenstoff (C)/Siliciumcarbid (SiC) beschichteten Kohlenstoff-Fasern; mit Iridium (Ir)/Siliciumcarbid (SiC) beschichteten Aluminiumoxidfasern; mit Niob (Nb)/Siliciumcarbid (SiC) beschichteten Aluminiumoxidfasern sowie mit Platin (Pt)-/Siliciumcarbid (SiC) beschichteten Aluminiumoxidfasern besteht.

**23.** Verfahren nach irgendeinem der Ansprüche 1 bis 20, bei dem der genannten mehrphasige Verbundkörper einen Metallmatrix-Verbundkörper umfaßt, der wenigstens einen Verstärkungsfüllstoff aufweist, der wenigstens einen keramikbeschichteten Füllstoff umfaßt.

**24.** Verfahren nach Anspruch 23, bei dem der genannte wenigstens eine keramikbeschichtete Füllstoff wenigstens ein Materialsystem umfaßt, das aus mit Aluminiumoxid beschichteten Kohlenstoff-Fasern und mit Siliciumcarbid beschichteten Kohlenstoff-Fasern besteht.

**Revendications**

1. Procédé pour éliminer au moins un composant métallique d'un constituant métallique présent à l'intérieur d'un corps composite multiphasique, comprenant :

   la mise en contact d'au moins une portion d'au moins une surface dudit corps composite multiphasique avec une masse perméable comprenant au moins une matière choisie dans le groupe consistant en une charge et une préforme ; et

   l'imprégnation spontanée d'au moins une portion de la masse perméable avec au moins un composant métallique d'un constituant métallique du corps composite, en réduisant ainsi la quantité dudit composant métallique d'au moins un type dans le corps composite.

2. Procédé pour éliminer au moins un composant métallique d'un constituant métallique présent à l'intérieur d'un corps composite multiphasique, comprenant :

   la mise en place d'un corps composite comprenant au moins deux phases, une desdites phases comprenant un composant métallique, en contact avec une masse perméable, ladite masse perméable comprenant au moins une matière choisie dans le groupe consistant en une charge et une préforme, ladite masse perméable entrant en contact avec au moins une portion d'au moins une surface du corps composite ;

   la mise en communication d'au moins un agent choisi entre un activateur d'infiltration et un précurseur d'activateur d'infiltration avec au moins un élément du groupe comprenant le composant métallique du corps composite, ladite masse perméable, ladite portion d'au moins un type d'au moins une surface et une atmosphère d'infiltration, pour provoquer l'infiltration spontanée du composant métallique dans la masse perméable ; et

   l'infiltration spontanée du composant métallique fondu dans au moins une portion de la masse perméable.

3. Procédé suivant l'une quelconque des revendications 1 et 2, dans lequel la masse perméable entoure pratiquement totalement le corps composite, ou dans lequel la masse perméable entre en contact pratiquement seulement avec une face dudit corps composite.

4. Procédé suivant l'une quelconque des revendications 1 et 2, dans lequel la charge comprend au moins une matière céramique en particules.

5. Procédé suivant l'une quelconque des revendications 1 à 3, dans lequel le composant métallique du corps composite est éliminé sélectivement seulement de la portion du corps composite qui entre en contact avec la masse perméable.

6. Procédé suivant l'une quelconque des revendications 1 à 5, dans lequel l'atmosphère d'infiltration communique avec la masse perméable pendant pratiquement la totalité de l'étape d'infiltration spontanée.

7. Procédé suivant l'une quelconque des revendications 1 à 6, dans lequel l'activateur d'infiltration est fourni au moins au composant métallique dans le corps composite multiphasique et à la masse perméable.

8. Procédé suivant l'une quelconque des revendications 2 à 7, dans lequel le composant métallique comprend l'aluminium, le précurseur d'activateur d'infiltration comprend le magnésium et l'atmosphère d'infiltration comprend l'azote.

9. Procédé suivant l'une quelconque des revendications 2 à 8, dans lequel l'activateur d'infiltration est formé par réaction du précurseur d'activateur d'infiltration et d'au moins une entité choisie dans le groupe consistant en l'atmosphère d'infiltration et une matière ajoutée à la masse perméable.

10. Procédé suivant la revendication 9, dans lequel un activateur d'infiltration comprenant un nitrure de magnésium est formé par une réaction entre une atmosphère d'infiltration consistant en azote et un précurseur d'activateur d'infiltration contenant du magnésium.

**11.** Procédé suivant l'une quelconque des revendications 1 à 10, dans lequel la masse perméable est mise en contact avec un moyen d'arrêt, et l'infiltration spontanée se produit seulement jusqu'audit moyen d'arrêt.

**12.** Procédé suivant l'une quelconque des revendications 1 à 11, dans lequel l'infiltration spontanée a pour résultat une gradation des propriétés dans le corps formé après au moins élimination d'au moins une portion dudit composant métallique de ce corps.

**13.** Procédé suivant la revendication 12, dans lequel la gradation de propriétés se produit en raison d'au moins une étape choisie dans le groupe d'étapes consistant (1) à interrompre l'infiltration spontanée avant l'élimination totale du composant métallique ; (2) à ajuster la température à des points de référence différents au cours de ladite infiltration spontanée ; (3) à fournir des quantités différentes d'activateur d'infiltration et/ou de précurseur d'activateur d'infiltration à au moins un élément du groupe comprenant la masse perméable et le composant métallique ; (4) à amener ladite masse perméable qui entre en contact avec le corps composite à présenter des propriétés différentes au niveau de portions différentes de cette masse ; et (5) à ajuster l'infiltration de ladite masse perméable avec le composant métallique provenant dudit corps composite multiphasique de telle sorte qu'il en résulte l'infiltration de quantités différentes dans certaines zones de la masse perméable par rapport à d'autres zones de la masse perméable.

**14.** Procédé suivant l'une quelconque des revendications 1 à 13, dans lequel, pendant et/ou après l'infiltration spontanée, au moins une couche de conversion de matrice est formée dans au moins une portion du corps composite multiphasique.

**15.** Procédé suivant la revendication 14, dans lequel : (1) la couche de conversion de matrice est formée sur au moins une portion d'une phase de renforcement dans le corps composite multiphasique ; ou (2) ladite couche de conversion de matrice comprend un produit de réaction formé par une réaction entre au moins une portion du composant métallique et au moins une autre entité ; ou (3) suivant la revendication 2, dans lequel la couche de conversion de matrice est formée par une réaction entre l'atmosphère d'infiltration et ladite portion au moins dudit composant métallique.

**16.** Procédé suivant la revendication 2, dans lequel le composant métallique d'au moins un type comprend l'aluminium, le précurseur d'activateur d'infiltration comprend du magnésium présent en une quantité d'au moins 0,1 % en poids et l'atmosphère d'infiltration comprend l'azote.

**17.** Procédé suivant la revendication 16, dans lequel l'infiltration spontanée se produit à une température d'au moins environ 675°C, et de préférence d'environ 675°C à environ 1000°C, et dans lequel la couche de conversion de matrice comprend le nitrure d'aluminium.

**18.** Procédé suivant la revendication 11, dans lequel le moyen d'arrêt est placé en contact avec la masse perméable par au moins un procédé choisi dans le groupe consistant en la peinture, l'immersion, la sérigraphie, l'évaporation, la pulvérisation cathodique, le dépôt et la mise en contact d'une matière ou feuille solide avec ladite masse perméable.

**19.** Procédé suivant l'une quelconque des revendications précédentes, dans lequel le corps composite multiphasique comprend au moins un corps choisi dans le groupe consistant en un corps composite à matrice céramique et un corps composite à matrice métallique, et dans lequel le corps composite multiphasique est renforcé par au moins une matière choisie dans le groupe de matières consistant en poudres, paillettes, plaquettes, microsphères, trichites, bulles, fibres, particules, mats de fibres, fibres broyées, sphères, pastilles, tubules et étoffes réfractaires.

**20.** Procédé suivant la revendication 19, dans lequel une couche de conversion de matrice est présente dans au moins une portion de la matière de renforcement.

**21.** Procédé suivant l'une quelconque des revendications précédentes, dans lequel le corps composite multiphasique comprend un corps composite à matrice céramique comprenant au moins une charge de renforcement renfermant au moins une charge céramique portant une pluralité de revêtements superposés.

37

**22.** Procédé suivant la revendication 21, dans lequel la charge céramique, d'au moins un type, portant une pluralité de revêtements superposés comprend au moins une matière choisie dans le groupe consistant en fibres de carbure de silicium revêtues de nitrure de bore (BN)/carbure de silicium (SiC) ; libres de carbure de silicium revêtues de carbure de titane (TiC)/nitrure de silicium (Si$_3$N$_4$) ; fibres de carbure de silicium revêtues de carbone (C)/carbure de silicium (SiC) ; libres de carbone revêtues de carbone (C)-/carbure de silicium (SiC) ; libres d'alumine revêtues d'iridium (Ir)/carbure de silicium (SiC) ; libres d'alumine revêtues de niobium (Nb)/carbure de silicium (SiC) ; et fibres d'alumine revêtues de platine (Pt)/carbure de silicium (SiC).

**23.** Procédé suivant l'une quelconque des revendications 1 à 20, dans lequel le corps composite multiphasique comprend un corps composite à matrice métallique comprenant au moins une charge de renforcement renfermant au moins une charge revêtue d'une matière céramique.

**24.** Procédé suivant la revendication 23, dans lequel la charge revêtue de matière céramique, d'au moins un type, comprend au moins une matière choisie entre des libres de carbone revêtues d'alumine et des libres de carbone revêtues de carbure de silicium.

Fig. 1a

Fig. 1b

Fig - 2

Fig. 3

41

Fig. 4a

Fig. 4b

Fig - 5a

Fig - 5b

Fig - 6a

Fig - 6b

Fig- 7a

Fig - 7b

110

111

112

Fig. 7c

805

801

804

Fig- 8c

Fig. 8a

Fig. 8b